# EUROPEAN PATENT SPECIFICATION

(11) **EP 4 581 853 B1**
(45) Date of publication and mention of the grant of the patent: **10.06.2026**
(21) Application number: 23757296.1
(22) Date of filing: 18.08.2023
(51) Int. Cl.: H04L 9/40, H04W 12/122, H05B 47/19, H05B 47/175

(54) **OPERATING WITH COMPROMISED MASTER CONTROLLERS FOR ELECTRICAL SYSTEMS**
BETRIEB MIT BEEINTRÄCHTIGTEN MASTER-STEUERGERÄTEN FÜR ELEKTRISCHE SYSTEME
FONCTIONNEMENT AVEC CONTRÔLEURS MAÎTRES COMPROMIS POUR SYSTÈMES ÉLECTRIQUES

(30) Priority: 30.08.2022 US 202263402256 P; 09.09.2022 EP 22194875
(43) Date of publication of application: 09.07.2025
(73) Proprietor: Signify Holding B.V., 5656 AE Eindhoven (NL)
(72) Inventor: ATMAKURI, Naveen Kumar, 5656 AE Eindhoven (NL); AINAPURE, Ameya Vilas, 5656 AE Eindhoven (NL); MARTIN, Russell Tyler, 5656 AE Eindhoven (NL)
(74) Representative: Verweij, Petronella Daniëlle
(86) International application number: PCT/EP2023/072782
(87) International publication number: WO 2024/046783

(56) References cited:
- US-A1- 2020 120 103
- US-A1- 2021 385 239

## Description

### TECHNICAL FIELD

The present disclosure relates generally to electrical systems, and more particularly to systems, methods, and devices for operating with compromised master controllers for electrical systems.

### BACKGROUND

Certain types of electrical systems are controlled by a master controller. For example, a number of lighting systems include multiple light fixtures that are controlled by a master controller. In such a case, the master controller controls the operation of multiple light fixtures (or subset thereof) within the lighting system. At times, the master controller can be compromised (e.g., is hacked, sends erratic commands). When the master controller is compromised, the master controller can control one or more of the light fixtures in the lighting system in such a way that reduces the effectiveness of the lighting system and/or reduces the reliability of one or more of the light fixtures within the lighting system

US2021/385239 describes autonomous recovery techniques for online isolation and replacement of compromised controller ECUs.

### SUMMARY

The invention is defined by the appended claims

In general, in one aspect, the disclosure relates to an electrical device of an electrical system. The electrical device can include a communication module is configured to receive instructions from a master controller of the electrical system over a default communication network, and wherein the communication module is further configured to communicate with an additional electrical device of the electrical system over an alternative communication network. The electrical device can also include a device controller communicably coupled to the communication module. The device controller can be configured to receive a first communication from the communication module, where the first communication is received by the communication module from the master controller over the default communication network, and where the first communication comprises a first instruction. The device controller can also be configured to determine that the first instruction of the first communication falls outside a plurality of acceptable operating parameters. The device controller can further be configured to generate a second instruction to replace the first instruction, where the second instruction falls within the plurality of acceptable operating parameters. The device controller can also be configured to send, using the communication module, the second instruction to the additional electrical device over the alternative communication network, where the second instruction controls operation of the additional electrical device over subsequent communications from the master controller.

In other aspects, the disclosure relates to a method for operating an electrical system with a master controller that is compromised. The method can include receiving, by a first electrical device of the electrical system, a first communication from the master controller over a default communication network, where the first communication comprises a first instruction. The method can also include determining that the first instruction of the first communication falls outside a plurality of acceptable operating parameters. The method can further include generating a second instruction to replace the first instruction. The method can also include sending the second instruction to a second electrical device of the electrical system over an alternative communication network, where the second instruction controls operation of the second electrical device over subsequent communications from the master controller.

These and other aspects, objects, features, and embodiments will be apparent from the following description and the appended claims.

### BRIEF DESCRIPTION OF THE DRAWINGS

The drawings illustrate only example embodiments and are therefore not to be considered limiting in scope, as the example embodiments may admit to other equally effective embodiments. The elements and features shown in the drawings are not necessarily to scale, emphasis instead being placed upon clearly illustrating the principles of the example embodiments. Additionally, certain dimensions or positions may be exaggerated to help visually convey such principles. In the drawings, reference numerals designate like or corresponding, but not necessarily identical, elements.
FIG. 1 show a block diagram of an electrical system according to certain example embodiments.
FIG. 2 shows a block diagram of an electrical device of the electrical system of FIG. 1 according to certain example embodiments.
FIG. 3 shows a computing device in accordance with certain example embodiments.
FIG. 4 shows a flowchart of a method for operating an electrical system with a master controller that is compromised according to certain example embodiments.
FIG. 5 shows a flowchart of another method for operating an electrical system with a master controller that is compromised according to certain example embodiments.
FIG. 6 shows a system of multiple electrical devices used to operate an electrical system with a master controller that is compromised according to certain example embodiments.

### DETAILED DESCRIPTION

In general, example embodiments provide systems, methods, and devices for operating with compromised master controllers for electrical systems. Example embodiments can provide a number of benefits. Such benefits can include, but are not limited to, increased security, ease of installation, increased reliability, longevity of electrical devices, user control, and simple configurability. Example embodiments can be used with any electrical systems that include any of a number of different electrical devices that are controlled by one or more master controllers. Examples of such electrical systems can include, but are not limited to, lighting systems with multiple light fixtures, sensor systems with multiple sensor devices, communication systems with multiple communication devices, and security systems with multiple security devices (e.g., cameras, spotlights, microphones, speakers).

Electrical systems with which example embodiments can be used can be located in one or more of any of a number of environments. Examples of such environments can include, but are not limited to, indoors, outdoors, a parking garage, a stadium, a hallway, an entertainment room, an office space, a manufacturing plant, a warehouse, and a storage facility, any of which can be climate-controlled or non-climate-controlled. In some cases, the example embodiments discussed herein can be used in any type of hazardous environment, including but not limited to an airplane hangar, a drilling rig (as for oil, gas, or water), a production rig (as for oil or gas), a refinery, a chemical plant, a power plant, a mining operation, a wastewater treatment facility, and a steel mill.

In the foregoing figures showing example embodiments of operating with compromised master controllers for electrical systems, one or more of the components shown may be omitted, repeated, and/or substituted. Accordingly, example embodiments of operating with compromised master controllers for electrical systems should not be considered limited to the specific arrangements of components shown in any of the figures. For example, features shown in one or more figures or described with respect to one embodiment can be applied to another embodiment associated with a different figure or description.

In certain example embodiments, electrical systems operating with compromised master controllers are subject to meeting certain standards and/or requirements. For example, the National Electric Code (NEC), the National Electrical Manufacturers Association (NEMA), the International Electrotechnical Commission (IEC), the Federal Communication Commission (FCC), Underwriters Laboratories (UL), and the Institute of Electrical and Electronics Engineers (IEEE) set standards as to electrical enclosures, wiring, and electrical connections. Use of example embodiments described herein meet (and/or allow the electrical systems, including components thereof, to meet) such standards when applicable.

If a component of a figure is described but not expressly shown or labeled in that figure, the label used for a corresponding component in another figure can be inferred to that component. Conversely, if a component in a figure is labeled but not described with respect to that figure, the description for such component can be substantially the same as the description for a corresponding component in another figure. The numbering scheme for the various components in the figures herein is such that each component is a three-digit number, and corresponding components in other figures have the identical last two digits.

In addition, a statement that a particular embodiment (e.g., as shown in a figure herein) does not have a particular feature or component does not mean, unless expressly stated, that such embodiment is not capable of having such feature or component. For example, for purposes of present or future claims herein, a feature or component that is described as not being included in an example embodiment shown in one or more particular drawings is capable of being included in one or more claims that correspond to such one or more particular drawings herein.

Example embodiments of operating with compromised master controllers for electrical systems will be described more fully hereinafter with reference to the accompanying drawings, in which example embodiments of operating with compromised master controllers for electrical systems are shown. Operating with compromised master controllers for electrical systems may, however, be embodied in many different forms and should not be construed as limited to the example embodiments set forth herein. Rather, these example embodiments are provided so that this disclosure will be thorough and complete, and will fully convey the scope of operating with compromised master controllers for electrical systems to those of ordinary skill in the art. Like, but not necessarily the same, elements (also sometimes called components) in the various figures are denoted by like reference numerals for consistency.

Terms such as "first", "second", "above", "below", "inner", "outer", "distal", "proximal", "end", "top", "bottom", "upper", "lower", "side", "left", "right", "front", "rear", and "within", when present, are used merely to distinguish one component (or part of a component or state of a component) from another. Such terms are not meant to denote a preference or a particular orientation. Such terms are not meant to limit embodiments of operating with compromised master controllers for electrical systems. In the following detailed description of the example embodiments, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

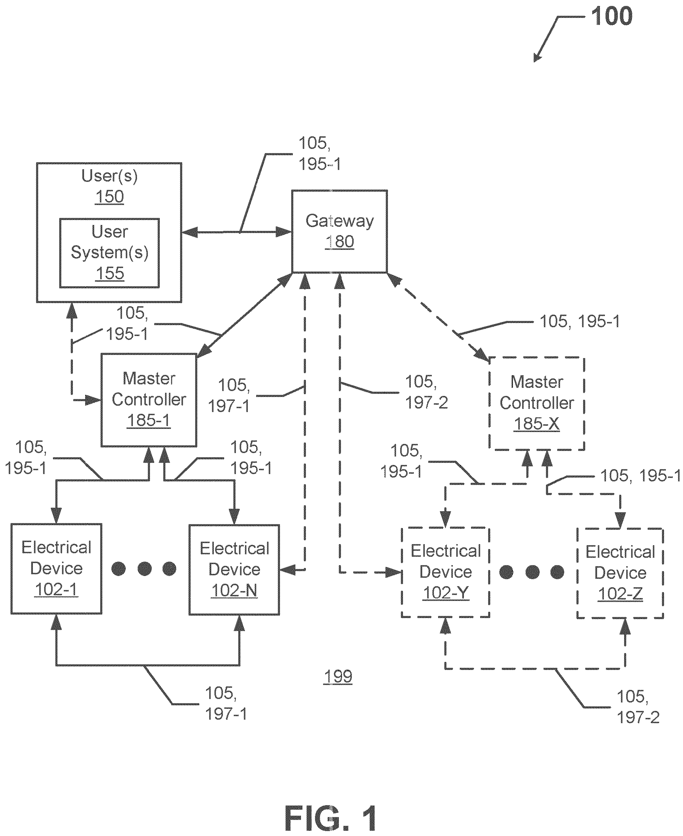

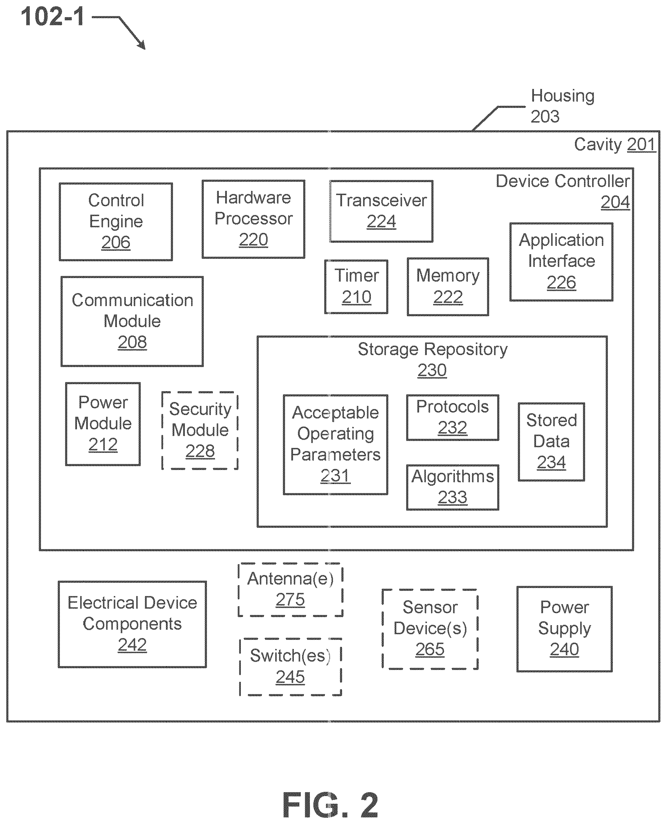

FIG. 1 show a block diagram of an electrical system 100 according to certain example embodiments. FIG. 2 shows a block diagram of an electrical device 102-1 of the electrical system 100 of FIG. 1 according to certain example embodiments. The electrical system 100 includes multiple components. For example, in this case, the electrical system 100 includes one or more users 150 (which can each include one or more user systems 155), a gateway 180, one or more master controllers 185 (e.g., master controller 185-1, master controller 185-X), and one or more electrical devices 102 (e.g., electrical device 102-1, electrical device 102-N, electrical device 102-Y, electrical device 102-Z).

The master controllers 185 in this example are substantially the same as each other in terms of the functionality of example embodiments. As a result, reference to one master controller 185 (e.g., master controller 185-1) can similarly refer to each other master controller 185 (e.g., master controller 185-X) individually or all other master controllers 185 collectively. In addition, the electrical devices 102 in this example are substantially the same as each other in terms of the functionality of example embodiments. As a result, reference to one electrical device 102 (e.g., electrical device 102-1) can similarly refer to each other electrical device 102 individually or all other electrical devices 102 collectively.

The electrical devices 102 are located, at least in part, in a volume of space 199. The volume of space 199 can be any indoor and/or outdoor area in which multiple electrical devices 102 operate. Examples of a volume of space 199 can include, but are not limited to, an office building, a store, a convention center, a parking lot, a park, an entertainment venue, and a medical facility. When the electrical system 100 includes multiple master controllers 185, there can be multiple zones of interest within the volume of space 199, where electrical devices 102 within a particular zone of interest are controlled by one of the master controllers 185. For example, if a volume of space 199 is a multi-story office building, each floor can be a zone of interest. In this case, electrical device 102-1 through electrical device 102-N are controlled by master controller 185-1, and electrical device 102-Y through electrical device 102-Z are controlled by master controller 185-X.

The components shown in FIGS. 1 and 2 are not exhaustive, and in some embodiments, one or more of the components shown in FIGS. 1 and 2 may not be included in the electrical system 100 or portions thereof (e.g., an electrical device 102). For example, any component of an electrical device 102 (e.g., electrical device 102-1) can be discrete or combined with one or more other components of the electrical device 102. For instance, as shown in FIG. 2, each electrical device 102 in the electrical system 100 can have its own device controller 204. Alternatively, one device controller 204 can be used to control multiple electrical devices 102 in the electrical system 100. As another example, an electrical device 102 can include one or more additional components (e.g., an optional antenna 275, an optional switch 245) that are shown in FIG. 2.

An electrical device 102 is any device that uses electricity, at least in part, to operate. As discussed above, the electrical system 100 includes multiple electrical devices 102 overall. Further, multiple electrical devices 102 are organized into a single group that is controlled by a master controller 185. In this case, one group of electrical devices 102, controlled by master controller 185-1, includes electrical device 102-1 through electrical device 102-N. Another group of electrical devices 102, controlled by master controller 185-X, includes electrical device 102-Y through electrical device 102-Z. Each electrical device 102 in the electrical system 100 can be commissioned before being put into service. Examples of electrical devices 102 can include, but are not limited to, a luminaire (also called by other names such as a light fixture and a lighting device), a light switch, an automated vent baffle, an automated window covering, a ceiling fan, a projector, a computer, a telephone, a control panel, a thermostat, an electrical wall outlet, a sensor device (e.g., a smoke detector, a CO₂ monitor, a motion detector, a broken glass sensor), and a camera.

Each electrical device 102 can include multiple components. For example, in this case, as shown in FIG. 2 for electrical device 102-1, each electrical device 102 includes a device controller 204, a power supply 240, one or more optional sensor devices 265, one or more optional antennae 275, one or more optional switches 245, and one or more electrical device components 242. The device controller 204 can include one or more of a number of components. For example, as shown in FIG. 2, the device controller 204 can include a control engine 206, a communication module 208, a timer 210, a power module 212, a hardware processor 220, a memory 222, a transceiver 224, an application interface 226, a storage repository 230, and an optional security module 228.

The electrical device components 242 of an electrical device 102 are devices and/or components typically found in the electrical device 102 to allow the electrical device 102 to operate. An electrical device component 242 can be electrical, electronic, mechanical, or any combination thereof. An electrical device 102 can have one or more of any number and/or type of electrical device components 242. For example, when the electrical device 102 is a light fixture, examples of such electrical device components 242 can include, but are not limited to, a light source, a light engine, a heat sink, an electrical conductor or electrical cable, a terminal block, a lens, a diffuser, a reflector, an air moving device, a baffle, a dimmer, an antenna, a switch, and a circuit board.

Each electrical device 102 can be configured to be commissioned after the electrical device 102 is installed and before the electrical device 102 is put into operation. As part of the commissioning process, each electrical device 102 is configured to send and receive various communication signals. For example, each electrical device 102 that is located within a communication range of the commissioning device (e.g., an independent commissioning device, a master controller 185) can be configured to receive and interpret the contents of a query signal (a type of communication signal that instructs the electrical device 102 to notify the master controller 185 that the electrical device 102 has received the query signal) broadcast by the commissioning device. In response to receiving a query signal, the electrical device 102 can further be configured to generate and send an identification signal (another type of communication signal that notifies a master controller185 that the electrical device 102 has received the query signal) to the master controller 185 that is within a communication range of and assigned to control the electrical device 102.

A user 150 may be any person that interacts with the gateway 180, an electrical device 102, a local controller 185, and/or another component of the electrical system 100. Specifically, a user 150 may program, operate, and/or interface with one or more components (e.g., electrical device 102-1, the gateway 180), or portion (e.g., the device controller 204) thereof, associated with the electrical system 100. Examples of a user 150 can include, but are not limited to, a hacker, an employee, an engineer, an electrician, a technician, a property manager, a tenant, a business owner, an operator, a consultant, a contractor, an asset, and a manufacturer's representative.

A user 150 can use a user system 155, which may include a display (e.g., a GUI). A user 150 (including an associated user system 155) interacts with (e.g., sends data to, receives data from) the gateway 180 and/or another component of the electrical system 100 via an application interface, which can be substantially the same as the application interface 226 described below with respect to the device controller 204. Interaction (including transmission of radio frequency (RF) signals and/or other types of communication signals) between the users 150 (including associated user systems 155), the electrical devices 102, the gateway 180, and the master controllers 185 can be facilitated using communication links 105.

Each communication link 105 can include one or more wired (e.g., Class 1 electrical cables, Class 2 electrical cables, Power Line Carrier, RS485, DALI, electrical connectors) and/or wireless (e.g., Wi-Fi, visible light communication, cellular networking, Bluetooth, BLE, Zigbee, LoRa, ultra-wideband (UWB), WirelessHART, ISA100) technology. For example, a communication link 105 can be (or include) one or more electrical conductors that are coupled to various components of the electrical system 100. The communication links 105 can transmit signals (e.g., power signals, communication signals (e.g., RF signals), control signals, data) between the electrical devices 102, the users 150 (including associated user systems 155), the master controllers 185, and/or the gateway 180.

In certain example embodiments, there are multiple communication networks that utilize the communication links 105. One communication network 195 (in this example, communication network 195-1, also called a default communication network 195-1) is used for routine communications between the users 150 (including associated user systems 155), the gateway 180, the master controllers 185, and the electrical devices 102. The one or more other (alternative) communication networks 197 (in this example, communication network 197-1 for electrical device 102-1 through electrical device 102-N and communication network 197-2 for electrical device 102-Y through electrical device 102-Z) are used between the electrical devices 102 during times when a master controller 185 is suspected of being compromised.

In certain example embodiments, the alternative communication networks 197 (also sometimes called a backhaul network 197 or a backhaul communication network 197 herein) are designed allow the electrical devices 102 within a group (and in some cases, between groups) to communicate with each other and determine whether a master controller 185 has been compromised without the master controller 185 being aware of those communications. In this way, if a master controller 185 has been hacked, the electrical devices 102 in the group controlled by the master controller 185 can determine that the electrical device 102 is compromised and effectively override or ignore instructions received from the compromised master controller 185 until the issue with the master controller 185 is effectively addressed so that the master controller 185 is no longer compromised.

One or more of the alternative communication networks 197 can be established upon manufacturing the electrical devices 102. Alternatively, one or more of the alternative communication networks 197 can be established when commissioning the electrical devices 102. As yet another alternative, one or more of the alternative communication networks 197 can be established by the device controller 204 of one or more of the electrical devices 102 when the device controller 204 of those one or more electrical devices 102 determines that the associated master controller 185 may be compromised.

An alternative communication network 197 can differ from the communication network 195 in one or more of a number of ways, even though all of the communication networks use the communication links 105. Ways in which an alternative communication network 197 can differ from the communication network 195 can include, but are not limited to, use of different frequencies that are not used by the communication network 195 and/or the master controller 185 in sending and receiving communication signals, use of different channels (e.g., channels of the communication module 208 of the device controller 204) that are not used by the communication network 195 and/or the master controller 185, and use of identification codes that are not recognized in communication network 195 and/or the master controller 185. **In** this way, when electrical devices 102 send communication signals on an alternative communication network 197, the master controllers 185 are unaware of those communication signals.

The gateway 180 is a device or component that controls all or a portion of the electrical system 100, which includes the master controllers 185 and, in some cases, the device controller 204 of at least one of the electrical devices 102. The gateway 180 can be substantially similar (e.g., in terms of its components, in terms of its capabilities) to the device controller 204 of an electrical device 102. Alternatively, the gateway 180 can include one or more of a number of features in addition to, or altered from, the features of the device controller 204.

In some cases, a gateway 180 can be called by other names, including but not limited to an insight manager, an enterprise manager, a network manager, a network coordinator, and a network controller. In the embodiment shown in FIG. 1, the gateway 180 receives data from the master controllers 185 and processes this data (e.g., using algorithms (e.g., algorithms 233) and/or protocols (e.g., protocols 232)) to control the master controllers 185, which in turn control their respective groups of electrical devices 102. The gateway 180 can be located in the volume of space 199 or remotely from the volume of space 199.

Each master controller 185 (sometimes called by other names, including but not limited to a wireless access controller and an access controller) performs a number of different functions. For example, a master controller 185 can help communicate with and control the device controller 204 of one or more electrical devices 102 within its group to help control the operation of those electrical devices 102. For commissioning, the master controller 185 can be responsible for pairing the device controller 204 of an electrical device 102, providing configuration data to the device controller 204 and/or other components of an electrical device 102, synchronizing the timing of the device controller 204 and/or other components of an electrical device 102, supporting the firmware of the device controller 204 and/or other components of an electrical device 102, upgrading the software used by the device controller 204 and/or other components of an electrical device 102, and/or performing any other function with respect to the electrical device 102 (including components thereof) to support operating activities.

Each master controller 185 can also be configured to communicate with the gateway 180. Such communications between a master controller 185 and the gateway 180 can include, for example, instructions for operating the electrical devices 102 within the group controlled by the master controller 185, the status of one or more of the electrical devices 102, and data collected by a sensor device 265 of an electrical device 102.

Each master controller 185 can have at least some features and/or components that are similar to the device controller 204 of an electrical device 102. The controller of a master controller 185 can create and maintain a table that contains information about the electrical devices 102 that are controlled by the master controller 185 after the commissioning process has been completed. Communications between a master controller 185 and the electrical devices 102 under its control can be used to help populate and update these tables. For example, a master controller 185 can receive an ungrouping signal from the gateway 180 to instruct the master controller 185 to remove an electrical device 102 from the table maintained by the master controller 185.

When a master controller 185 receives data (e.g., confirmation of receipt of a RF signal and/or other type of communication signal) from an electrical device 102 or the gateway 180, the master controller 185 can convert the data into a different format (e.g., ECAPI). The master controller 185 can then send the newly formatted data to another component (e.g., the gateway 180, one or more electrical devices 102) of the electrical system 100. To help diagnose issues, a master controller 185 can maintain counters for each paired electrical device 102 and include, for example, the number of received packed data messages from a particular electrical device 102, the number of formatted messages successfully transmitted to the gateway 180 that pertain to the packed data from a particular electrical device 102, and the number of formatted messages pertaining to the packed data from a particular electrical device 102 that failed to transmit to the gateway 180.

In some cases, a master controller 185 maintains the average and maximum latency introduced between the receipt of a communication from one component (e.g., an electrical device 102) of the electrical system 100 and transmission of a formatted message to another component (e.g., the gateway 180) of the electrical system 100. A master controller 185 can also notify the gateway 180 when the average or maximum latency exceeds a threshold value. Further, a master controller 185 can communicate to the gateway 180 when there is a significant discrepancy (e.g., as determined by the master controller 185) between the ingress and egress packets with respect to an electrical device 102.

When there are multiple master controllers 185, they can all be time-synchronized with each other. Also, with multiple master controllers 185, one master controller 185 may or may not be configured to directly communicate with at least one of the other master controllers 185 in the electrical system 100. In some cases, the functionality of a master controller 185 can be the same as, or at least partially combined with, the functionality of the device controller 204 of an electrical device 102. In other words, some or all of the description below with respect to the local controller 204 of the electrical device 102-1 can also apply to a master controller 185. A master controller 185 can be located in the volume of space 199 or remotely from the volume of space 199.

In certain example embodiments, a master controller 185 can be compromised. For example, if a user 150 is a hacker, a user system 155 of the user 150 can use one or more of the communication links 105 to access, without authorization, and hack the master controller 185. When this occurs, the user 150 can directly control the master controller 185 or otherwise cause the master controller 185 to operate in a way that is contrary to the normal operation of the master controller 185. When a master controller 185 is hacked, any instructions that the master controller 185 receives from the gateway 180 are ignored, overridden, or modified.

As another example, if a component (e.g., a hardware processor) of a master controller 185 malfunctions, then any instructions sent by the master controller 185 to one or more of the electrical devices 102 in its group can be different than the instructions received by the master controller 185 from the gateway 180. When a master controller 185 becomes compromised (e.g., behaves erratically), the electrical devices 102 within its group can receive instructions that fall outside acceptable operating parameters and/or fail to receive instructions that would otherwise fall within acceptable operating parameters. As defined herein, a master controller 185 that is compromised does not include a loss of power to the master controller 185.

A user 150 (including an associated user system 155), the gateway 180, a device controller 204 of another electrical device 102, and/or one or more master controllers 185 can interact with the device controller 204 of an electrical device 102 using the application interface 226 in accordance with one or more example embodiments. Specifically, the application interface 226 of the device controller 204 of an electrical device 102 receives data (e.g., information, communications, instructions) from and sends data (e.g., information, communications, instructions) to a user 150 (including an associated user system 155), the gateway 180, one or more master controllers 185, and/or one or more of the other electrical devices 102. A user 150 (including an associated user system 155), the gateway 180, one or more master controllers 185, and/or the device controller 204 of one or more of the other electrical devices 102 (e.g., within the same group, outside of the group) can include an interface to receive data from and send data to the device controller 204 of the electrical device 102 in certain example embodiments. Examples of such an interface can include, but are not limited to, a graphical user interface, a touchscreen, an application programming interface, a keyboard, a monitor, a mouse, a web service, a data protocol adapter, some other hardware and/or software, or any suitable combination thereof.

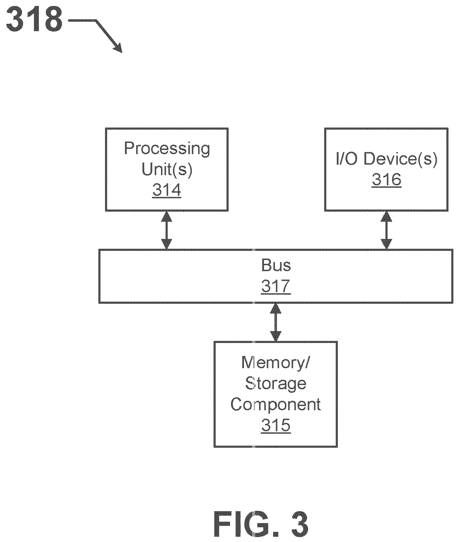

The device controller 204 of an electrical device 102, a user 150 (including an associated user system 155), the gateway 180, one or more of the master controllers 185, and/or the device controller 204 of one or more of the other electrical devices 102 can use their own system or share a system in certain example embodiments. Such a system can be, or contain a form of, an Internet-based or an intranet-based computer system that is capable of communicating with various software. A computer system includes any type of computing device and/or communication device, including but not limited to the device controller 204. Examples of such a system can include, but are not limited to, a desktop computer with a Local Area Network (LAN), a Wide Area Network (WAN), Internet or intranet access, a laptop computer with LAN, WAN, Internet or intranet access, a smart phone, a server, a server farm, an android device (or equivalent), a tablet, smartphones, and a personal digital assistant (PDA). Such a system can correspond to a computer system as described below with regard to FIG. 3.

Further, as discussed above, such a system can have corresponding software (e.g., user software, controller software, network manager software). The software can execute on the same or a separate device (e.g., a server, mainframe, desktop personal computer (PC), laptop, PDA, television, cable box, satellite box, kiosk, telephone, mobile phone, or other computing devices) and can be coupled by the communication network (e.g., Internet, Intranet, Extranet, LAN, WAN, or other network communication methods) and/or communication channels, with wire and/or wireless segments according to some example embodiments. The software of one system can be a part of, or operate separately but in conjunction with, the software of another system within the electrical system 100.

An electrical device 102 (e.g., electrical device 102-1) can include a housing 203. The housing 203 of an electrical device 102 can include at least one wall that forms a cavity 201. In some cases, the housing 203 of an electrical device 102 can be designed to comply with any applicable standards so that the electrical device 102 can be located in a particular environment (e.g., a hazardous environment, outdoors).

The housing 203 of an electrical device 102 can be used to house one or more components of the electrical device 102, including one or more components of the device controller 204. For example, the device controller 204 (which in this case includes the control engine 206, the communication module 208, the timer 210, the power module 212, the storage repository 230, the hardware processor 220, the memory 222, the transceiver 224, the application interface 226, and the optional security module 228), the one or more optional sensor devices 265, the one or more optional antennae 275, the one or more optional switches 245, and the power supply 240 can be disposed in the cavity 201 formed by the housing 203. In alternative embodiments, any one or more of these or other components of an electrical device 102 can be disposed on the housing 203, integrated with the housing 203, and/or disposed remotely from the housing 203.

The storage repository 230 of the device controller 204 can be a persistent storage device (or set of devices) that stores software and data used to assist the device controller 204 of an electrical device 102 in communicating with a user 150 (including an associated user system 155), the gateway 180, one or more master controllers 185, and/or one or more of the other electrical devices 102 within the electrical system 100. In one or more example embodiments, the storage repository 230 stores acceptable operating parameters 231, one or more protocols 232, one or more algorithms 233, and stored data 234.

The acceptable operating parameters 231 can be any parameters that fall within the normal operation of the electrical device 102. Examples of a parameter of the acceptable operating parameters 231 can include, but are not limited to, time (e.g., on time, off time, days on/off), a mode of operation (e.g., full output while on, full output level, dimmed output, dimming level, flashing/intermittent), a type of output (e.g., particular color output, particular temperature output, particular lumen output), and/or any other type of factor that defines the operation of the electrical device 102.

The acceptable operating parameters 231 have values that fall within a range that is expected for each of the one or more parameters that define the operation of the electrical device 102. For example, if a parameter is duration that the electrical device 102 can operate continuously, the values can range from a minimum of 20 minutes to a maximum of 12 hours. As another example, if a parameter is start time that the electrical device 102 can begin to operate, the values can be 6:00 am until 9:00 am Mondays through Fridays (excluding holidays) and 8:00 am through 10:30 am on Saturdays, Sundays, and holidays.

The values for the acceptable operating parameters 231 stored in the storage repository 230 can be obtained in one or more of a number of ways. For example, a user 150 can designate some or all of the values. As another example, the gateway 180 and/or the master controller 185 that controls the electrical device 102 can have the values as default settings and push the values to the electrical device 102 (e.g., upon commissioning, when updates become available). As yet another example, the device controller 204 can generate some or all of the values based on operational experience of the electrical device 102. In certain example embodiments, the device controller 204 of an electrical device 102 establishes and maintains the values of the acceptable operating parameters 231 in at least one table.

In certain example embodiments, not every electrical device 102 in a group has the acceptable operating parameters 231 in its storage repository 230. In such cases, an electrical device 102 that lacks the acceptable operating parameters 231 and receives an instruction in a communication signal from the master controller 185 can forward the communication signal or generate a new communication signal with the instruction received from the master controller 185 to another electrical device 102 in the group that has the acceptable operating parameters 231. This latter electrical device 102 can then assess whether the master controller 185 is compromised based on the instructions. If the master controller 185 is compromised, then the electrical device 102 can generate and send a communication signal to the originating electrical device 102 with overriding operating instructions and/or instructions to ignore subsequent instructions from the master controller 185.

The protocols 232 can be any procedures (e.g., a series of method steps) and/or other similar operational procedures that the control engine 206 of the device controller 204 follows based on certain conditions at a point in time. A protocol 232 can also include a process for determining whether an instruction received from the master controller 185 falls within the acceptable operating parameters 231. The protocols 232 can further include any of a number of communication protocols that are used to send and/or receive data between the device controller 204 and a user 150 (including an associated user system 155), the gateway 180, one or more of the other electrical devices 102, and/or one or more master controllers 185.

Such protocols 232 used for communication can instruct the control engine 206 of the device controller 204 as to when to send a communication using the communication network 195-1 or the communication network 195-2. One or more of the protocols 232 used for communication can be a time-synchronized protocol. Examples of such time-synchronized protocols can include, but are not limited to, a highway addressable remote transducer (HART) protocol, a wirelessHART protocol, and an International Society of Automation (ISA) 100 protocol. In this way, one or more of the protocols 232 used for communication can provide a layer of security to the data transferred within the electrical system 100.

The algorithms 233 can be any formulas, mathematical models, forecasts, simulations, and/or other similar tools that the control engine 206 of the device controller 204 uses to reach a computational conclusion. Algorithms 233 can be used to analyze past data, analyze current data, and/or perform forecasts. One or more particular algorithms 233 can be used in conjunction with one or more particular protocols 232. For example, one or more protocols 232 and one or more algorithms 233 can be used in conjunction with each other to determine whether a value associated with a particular instruction received from the master controller 185 falls within the range of values for the one or more corresponding acceptable operating parameters 231.

Stored data 234 can be any data associated with the electrical device 102, any data associated with one or more of the other electrical devices 102 (including any components thereof), any data associated with the master controllers 185, any data associated with the gateway 180, any measurements taken by the sensor devices 265, threshold values, user preferences, results of previously run or calculated algorithms, and/or any other suitable data. Such stored data 234 can be any type of data, including historical data, present data, and forecasts. The stored data 234 can be associated with some measurement of time derived, for example, from the timer 210.

Examples of a storage repository 230 can include, but are not limited to, a database (or a number of databases), a file system, a hard drive, flash memory, cloud-based storage, some other form of solid state data storage, or any suitable combination thereof. The storage repository 230 can be located on multiple physical machines, each storing all or a portion of the acceptable operating parameters 231, the protocols 232, the algorithms 233, and/or the stored data 234 according to some example embodiments. Each storage unit or device can be physically located in the same or in a different geographic location.

The storage repository 230 can be operatively connected to the control engine 206. In one or more example embodiments, the control engine 206 includes functionality to communicate with a user 150 (including an associated user system 155), the gateway 180, one or more master controllers 185, and/or the other electrical devices 102 in the electrical system 100. More specifically, the control engine 206 sends information to and/or receives information from the storage repository 230 in order to communicate with a user 150 (including an associated user system 155), the gateway 180, one or more master controllers 185, and/or one or more of the other electrical devices 102. As discussed below, the storage repository 230 can also be operatively connected to the communication module 208 in certain example embodiments.

In certain example embodiments, the control engine 206 of the device controller 204 controls the operation of one or more other components (e.g., the communication module 208, the timer 210, the transceiver 224) of the device controller 204. For example, the control engine 206 can put the communication module 208 in "sleep" mode when there are no communications between the device controller 204 and another component (e.g., one of the other electrical devices 102, a sensor device 265, a master controller 185, a user system 155) in the electrical system 100 or when communications between the device controller 204 and another component in the electrical system 100 follow a regular pattern. In such a case, power consumed by the device controller 204 is conserved by only enabling the communication module 208 when the communication module 208 is needed.

As another example, the control engine 206 can direct the timer 210 when to provide a current time, to begin tracking a time period, and/or perform another function within the capability of the timer 210. As yet another example, the control engine 206 can direct the communication module 208 to send communication signals and/or stop sending communication signals to one or more of the other electrical devices 102 (e.g., using an alternative communication network 197), the gateway 180 (e.g., using an alternative communication network 197), one or more of the user systems 155, and/or one or more master controllers 185 (e.g., using the default communication network 195) in the electrical system 100.

The control engine 206 can determine when to broadcast or otherwise send one or more communication signals and which communication network (e.g., the default communication network 195, an alternative communication network 197) to use in broadcasting those communication signals. To conserve energy, the control engine 206 may not constantly broadcast or otherwise send communication signals, but rather may only do so at discrete times. The control engine 206 can broadcast or otherwise a communication signal based on one or more of a number of factors, including but not limited to passage of time, the occurrence of an event (e.g., receipt of a communication signal from a master controller 185 that appears to indicate that the master controller 185 is compromised), instructions from a user 150 (including an associated user system 155), a confirmation signal received from a local controller 185, a communication signal received from another electrical device 102, and a command received from the gateway 180. The control engine 206 can coordinate with the device controllers 204 of one or more of the other electrical devices 102 and/or the master controllers 185 to broadcast or otherwise send multiple communication signals.

The control engine 206 of the device controller 204 can use one or more protocols 232 and/or one or more algorithms 233 to receive and interpret, using the default communication network 195, communication signals from the master controller 185. The control engine 206 of the device controller 204 can use one or more protocols 232 and/or one or more algorithms 233 to compare the contents of an instruction received from a master controller 185 against the acceptable operating parameters 231 (including the values thereof). The control engine 206 of the device controller 204 can also use one or more protocols 232 and/or one or more algorithms 233 to determine, based on comparing the contents of the instruction from the master controller 185 against the acceptable operating parameters 231, whether the master controller 185 is compromised.

The control engine 206 of the device controller 204 can further use one or more protocols 232 and/or one or more algorithms 233 to follow instructions upon determining that the instructions received from the master controller 185 received on the default communication network 195 fall within the acceptable operating parameters 231. The control engine 206 of the device controller 204 can also use the protocols 232 and/or the algorithms 233 to establish an alternative communication network 197 with one or more other electrical devices 102 in a group. The control engine 206 of the device controller 204 can further use the protocols 232 and/or the algorithms 233 to generate and send, using an alternative communication network 197, one or more communication signals to one or more other electrical devices 102 in order to confirm whether a master controller 185 has been compromised and/or to notify other electrical devices 102 that a master controller 185 has been compromised.

The control engine 206 of the device controller 204 can also use the protocols 232 and/or the algorithms 233 to generate and send, using an alternative communication network 197, one or more communication signals to instruct one or more other electrical devices 102 to ignore communication signals received from a master controller 185 that has been compromised and/or to instruct other electrical devices 102 how to operate while the master controller 185 is compromised. The control engine 206 of the device controller 204 can further use the protocols 232 and/or the algorithms 233 to receive, using the default communication network 195 and/or an alternative communication network 197, one or more communication signals to notify the electrical device 102 that a master controller 185 previously identified as compromised is no longer compromised and/or to instruct the electrical device 102 to resume following instructions received from a master controller 185 that was previously identified as compromised.

The control engine 206 of the device controller 204 can further use the protocols 232 and/or the algorithms 233 to generate and send, using an alternative communication network 197, one or more communication signals to notify one or more other electrical devices 102 that a master controller 185 previously identified as compromised is no longer compromised and/or to instruct other electrical devices 102 to resume following instructions received from a master controller 185 that was previously identified as compromised.

In certain example embodiments, the device controller 204 of an electrical device 102 can receive communication signals from a master controller 185 over the default communication network 195 and one or more of the other electrical devices 102 over an alternative communication network 197. In such a case, the control engine 206 of the device controller 204 can use the protocols 232 and/or the algorithms 233 to receive such communication signals and interpret the content of those communication signals.

The control engine 206 can provide communication signals (e.g., control, data) to a user 150 (including an associated user system 155), the gateway 180, the other electrical devices 102, and/or the master controllers 185. Similarly, the control engine 206 can receive communication signals from a user 150 (including an associated user system 155), the gateway 180, the other electrical devices 102, and/or the master controllers 185.

The control engine 206 can communicate with each of the other electrical devices 102, the gateway 180, the users 150 (including associated user systems 155), and/or one or more of the master controllers 185 automatically (for example, based on one or more algorithms 233 stored in the storage repository 230) and/or based on communication signals received from another device (e.g., a user system 155, a local controller 185) using one of the communication networks. The control engine 206 may include a printed circuit board, upon which the hardware processor 220 and/or one or more discrete components of the device controller 204 are positioned.

In certain embodiments, the control engine 206 of the device controller 204 can communicate with one or more components of a system external to the electrical system 100. For example, the control engine 206 can interact with an inventory management system by ordering a replacement for one of the electrical device components 242 that the control engine 206 has determined to fail or be failing. As another example, the control engine 206 can interact with a workforce scheduling system by scheduling a maintenance crew to repair or replace an electrical device component 242 when the control engine 206 determines that the electrical device component 242 requires maintenance or replacement. In this way, the device controller 204 is capable of performing a number of functions beyond what could reasonably be considered a routine task.

In certain example embodiments, the control engine 206 can include a specialized interface that enables the control engine 206 to communicate with a master controller 185. For example, if a master controller 185 operates under IEC Standard 62386, then the master controller 185 can include a digital addressable lighting interface (DALI). In such a case, the control engine 206 can also include a DALI to enable communication with the master controller 185. Such an interface can operate in conjunction with, or independently of, the protocols 232 used to communicate between the device controller 204 and a user 150 (including an associated user system 155), the gateway 180, the other electrical devices 102, and the master controllers 185.

The control engine 206 (or other components of the device controller 204) can also include one or more hardware and/or software architecture components to perform its functions. Such components can include, but are not limited to, a universal asynchronous receiver/transmitter (UART), a serial peripheral interface (SPI), a direct-attached capacity (DAC) storage device, an analog-to-digital converter, an inter-integrated circuit (I²C), and a pulse width modulator (PWM).

The default communication network 195 and each of the alternative communication networks 197 (using the communication links 105) of the electrical system 100 can have any type of network architecture. For example, the alternative communication network 197-1 of the electrical system 100 can be a mesh network. As another example, the default communication network 195 of the electrical system 100 can be a star network. When the device controller 204 includes an energy storage device (e.g., a battery as part of the power module 212), even more power can be conserved in the operation of the electrical system 100. In addition, using time-synchronized communication protocols 232, the data transferred between the device controller 204 and a user 150 (including an associated user system 155), the gateway 180, the master controllers 185, and/or the other electrical devices 102 can be secure.

The communication module 208 of the device controller 204 determines and implements the communication protocol (e.g., from the protocols 232 of the storage repository 230) that is used when the control engine 206 communicates with (e.g., sends signals to, receives signals from) a user 150 (including an associated user system 155), the gateway 180, the other electrical devices 102, and/or the master controllers 185. In some cases, the communication module 208 accesses the stored data 234 to determine which communication protocol is within the capability of the electrical devices 102, the user systems 155, the master controllers 185, and/or the gateway 180 for a communication signal sent by the control engine 206. In addition, the communication module 208 can interpret the communication protocol of a communication signal received by the device controller 204 (e.g., from a master controller 185, from another electrical device 102) so that the control engine 206 can interpret the contents of the communication signal.

The communication module 208 can send and receive data between the gateway 180, the other electrical devices 102, the master controllers 185, and/or the users 150 (including an associated user system 155) and the device controller 204. The communication module 208 can send and/or receive data in a given format that follows a particular protocol 232. The control engine 206 can interpret the data packet received from the communication module 208 using a protocol 232 stored in the storage repository 230. For example, the communication module 208 can be configured to receive instructions from a master controller 185 of the electrical system 100 over the default communication network 195. As another example, the communication module 208 can be configured to communicate with additional electrical device 102 of the electrical system 100 over an alternative communication network 197.

The communication module 208 can send data (e.g., acceptable operating parameters 231, protocols 232, stored data 234) directly to and/or retrieve data directly from the storage repository 230. Alternatively, the control engine 206 can facilitate the transfer of data between the communication module 208 and the storage repository 230. The communication module 208 can also provide encryption to data that is sent by the device controller 204 and decryption to data that is received by the device controller 204. The communication module 208 can also provide one or more of a number of other services with respect to data sent from and received by the device controller 204. Such services can include, but are not limited to, data packet routing information and procedures to follow in the event of data interruption.

The timer 210 of the device controller 204 can track clock time, intervals of time, an amount of time, and/or any other measure of time. The timer 210 can also count the number of occurrences of an event, whether with or without respect to time. Alternatively, the control engine 206 can perform the counting function. The timer 210 is able to track multiple time measurements concurrently. The timer 210 can be used to help measure one or more characteristics (e.g., the time of flight (ToF) of one or more communication signals (e.g., RF signals), the signal strength (e.g., RSSI value) of a communication signal, the frequency of a communication signal), even simultaneously. The timer 210 can track time periods based on an instruction received from the control engine 206, based on an instruction received from another components (e.g., a user 150 (including an associated user system 155), the gateway 180), based on an instruction programmed in the software for the device controller 204, based on some other condition or from some other component, or from any combination thereof.

The timer 210 can be configured to track time when there is no power delivered to the device controller 204 (e.g., the power module 212 malfunctions) using, for example, a super capacitor or a battery backup. In such a case, when there is a resumption of power delivery to the device controller 204, the timer 210 can communicate any aspect of time to the device controller 204. In such a case, the timer 210 can include one or more of a number of components (e.g., a super capacitor, an integrated circuit) to perform these functions.

The power module 212 of the device controller 204 provides power to one or more other components (e.g., timer 210, control engine 206) of the device controller 204. The power module 212 can include one or more of a number of single or multiple discrete components (e.g., transistor, diode, resistor), and/or a microprocessor. The power module 212 may include a printed circuit board, upon which the microprocessor and/or one or more discrete components are positioned. In some cases, the power module 212 can include one or more components that allow the power module 212 to measure one or more elements of power (e.g., voltage, current) that is delivered to and/or sent from the power module 212.

The power module 212 can include one or more components (e.g., a transformer, a diode bridge, an inverter, a converter) that receives power (for example, through an electrical cable) from the power supply 240. The power module 212 can then subsequently generate power of a type (e.g., alternating current, direct current) and level (e.g., 12V, 24V, 120V) that can be used by the other components of the device controller 204. In addition, or in the alternative, the power module 212 can or include be a source of power in itself. For example, the power module 212 can be or include an energy storage device (e.g., a battery). As another example, the power module 212 can be or include a localized photovoltaic power system.

The power module 212 can use a closed control loop to maintain a preconfigured voltage or current with a tight tolerance at the output. The power module 212 can also protect the rest of the electronics (e.g., hardware processor 220, transceiver 224) in the electrical device 102 from surges generated in the line. The power module 212 can also have sufficient isolation in the associated components of the power module 212 (e.g., transformers, opto-couplers, current and voltage limiting devices) so that the power module 212 is certified to provide power to an intrinsically safe circuit.

The hardware processor 220 of the device controller 204 executes software in accordance with one or more example embodiments. Specifically, the hardware processor 220 can execute software on the control engine 206 or any other portion of the device controller 204, as well as software used by a user 150 (including an associated user system 155), the gateway 180, one or more master controllers 185, and/or one or more of the other electrical devices 102. The hardware processor 220 can be or include an integrated circuit (IC), a central processing unit, a multi-core processing chip, a multi-chip module including multiple multi-core processing chips, or other hardware processor in one or more example embodiments. The hardware processor 220 can be known by other names, including but not limited to a computer processor, a microprocessor, and a multi-core processor.

In one or more example embodiments, the hardware processor 220 executes software instructions stored in memory 222. The memory 222 includes one or more cache memories, main memory, and/or any other suitable type of memory. The memory 222 is discretely located within the device controller 204 relative to the hardware processor 220 according to some example embodiments. In certain configurations, the memory 222 can be integrated with the hardware processor 220.

In certain example embodiments, the device controller 204 does not include a hardware processor 220. In such a case, the device controller 204 can include, as an example, one or more field programmable gate arrays (FPGA), one or more insulated-gate bipolar transistors (IGBTs), and/or one or more ICs. Using FPGAs, IGBTs, ICs, and/or other similar devices known in the art allows the device controller 204 (or portions thereof) to be programmable and function according to certain logic rules and thresholds without the use of a hardware processor 220. Alternatively, FPGAs, IGBTs, ICs, and/or similar devices can be used in conjunction with one or more hardware processors 220.

The transceiver 224 of the device controller 204 can send (using a transmitter) and/or receive (using a receiver) communication signals, including RF signals. Specifically, the transceiver 224 can be used to transfer data between the device controller 204 and a user 150 (including an associated user system 155), the gateway 180, the other electrical devices 102, and/or one or more master controllers 185. The transceiver 224 can use wired and/or wireless technology. The transceiver 224 can send and/or receive communication signals on the default communication network 195 and/or any of the alternative communication networks 197. The transceiver 224 can be configured in such a way that the communication signals sent and/or received by the transceiver 224 can be received and/or sent by another transceiver that is part of a user 150 (including an associated user system 155), the gateway 180, the other electrical devices 102, and/or the master controllers 185.

When the transceiver 224 uses wireless technology, any type of wireless technology can be used by the transceiver 224 in sending and receiving communication signals (e.g., RF signals). Such wireless technology can include, but is not limited to, Wi-Fi, visible light communication, infrared, cellular networking, 802.15.4 wireless, 5G cellular wireless, Zigbee, BLE, UWB, and Bluetooth. For example, the transceiver 224 can include a Zigbee transmitter, a Zigbee receiver, a BLE receiver, a BLE transmitter, an active IR transmitter, and/or an active IR receiver. The transceiver 224 can use one or more of any number of suitable communication protocols (e.g., ISA100, HART) when sending and/or receiving communication signals, including RF signals. Such communication protocols can be stored in the protocols 232 of the storage repository 230. Further, any transceiver information for a user 150 (including an associated user system 155), the gateway 180, the other electrical devices 102, and/or the master controllers 185 can be part of the stored data 234 (or similar areas) of the storage repository 230.

Optionally, in one or more example embodiments, the security module 228 secures interactions between the device controller 204, a user 150 (including an associated user system 155), the gateway 180, the other electrical devices 102, and/or the master controllers 185. More specifically, the security module 228 authenticates communication from software based on security keys verifying the identity of the source of the communication. For example, user software may be associated with a security key enabling the software of a user system 155 of a user 150 to interact with the device controller 204 of an electrical device 102. Further, the security module 228 can restrict receipt of information, requests for information, and/or access to information in some example embodiments.

As mentioned above, aside from the electrical device components 242 and the device controller 204, an electrical device 102 can include a power supply 240, one or more optional sensor devices 265, one or more optional antennae 275, and one or more switches 245. The power supply 240 of the electrical device 102 provides power to one or more other components (e.g., the device controller 204) of the electrical device 102. The power supply 240 can be substantially the same as, or different than, the power module 212 of the device controller 204. The power supply 240 can include one or more of a number of single or multiple discrete components (e.g., transistor, diode, resistor), and/or a microprocessor. The power supply 240 may include a printed circuit board, upon which the microprocessor and/or one or more discrete components are positioned.

The power supply 240 can include one or more components (e.g., a transformer, a diode bridge, an inverter, a converter) that receives power (for example, through an electrical cable) from or sends power to the power module 212 of the device controller 204. The power supply 240 can generate power of a type (e.g., alternating current, direct current) and level (e.g., 12V, 24V, 120V) that can be used by the recipients (e.g., the sensor devices 265, the device controller 204) of such power. In addition, or in the alternative, the power supply 240 can receive power from a source external to the electrical device 102. In addition, or in the alternative, the power supply 240 can be or include a source of power in itself. For example, the power supply 240 can be or include an energy storage device (e.g., a battery), a localized photovoltaic power system, or some other source of independent power.

Each of the one or more optional sensor devices 265 of an electrical device 102 can include any type of sensing device that measures one or more parameters. Examples of types of sensor devices 265 can include, but are not limited to, a camera, a passive infrared sensor, a photocell, a pressure sensor, an air flow monitor, a gas detector, and a resistance temperature detector. Examples of a parameter that is measured by a sensor device 265 can include, but are not limited to, characteristics (e.g., AoA, RSSI value) of a communication signal, identification of an electrical device 102 or a master controller 185, occupancy in the volume of space 199, motion in the volume of space 199, a temperature, a level of gas, a level of humidity, an amount of ambient light in the volume of space 199, and a pressure wave. In some cases, the parameter or parameters measured by a sensor device 265 can be used to trigger when one or more communication signals are broadcast or otherwise sent by the device controller 204.

A sensor device 265 can be an integrated sensor (also sometimes called an integrated sensor device 265). In integrated sensor has both the ability to sense and measure at least one parameter and the ability to communicate with another component (e.g., one or more electrical devices 102, a local controller 185). The communication capability of a sensor device 265 that is an integrated sensor can include one or more communication devices that are configured to communicate with, for example, the device controller 204 of the electrical device 102, a master controller 185, a user system 155, and/or the gateway 180. For example, an integrated sensor device 265 can include a camera, a transceiver (a combination transmitter and receiver) that sends and receives communication signals (e.g., with respect to a master controller 185) using Zigbee, and a transmitter that transmits communication signals (e.g., to one or more electrical devices 102) using BLE.

Each sensor device 265, whether integrated or not, can use one or more of a number of communication protocols. This allows a sensor device 265 to communicate with one or more components (e.g., the control engine 206 of the device controller 204, an electrical device 102, a master controller 185) of the electrical system 100. The communication capability of a sensor device 265 that is an integrated sensor can be dedicated to the sensor device 265 and/or shared with the device controller 204 of an electrical device 102. When the electrical system 100 includes multiple integrated sensor devices 265, one integrated sensor device 265 can communicate, directly or indirectly, with one or more of the other integrated sensor devices 265 in the electrical system 100.

If the communication capability of a sensor device 265 that is an integrated sensor is dedicated to the sensor device 265, then the sensor device 265 can include one or more components (e.g., a transceiver 224, a communication module 208), or portions thereof, that are substantially similar to the corresponding components described above with respect to the device controller 204. A sensor device 265 can be integrated with an electrical device 102, can be a stand-alone device, and/or can be integrated with another component in the electrical system 100.

In certain example embodiments, a sensor device 265 can include an energy storage device (e.g., a battery) that is used to provide power, at least in part, to some or all of the sensor device 265. In such a case, the energy storage device can be the same as, or independent of, an energy storage device or other power supply 240 of an electrical device 102. The optional energy storage device of the sensor device 265 can operate at all times or when the power supply 240 of the electrical device 102 is interrupted. Further, a sensor device 265 can utilize or include one or more components (e.g., memory 222, storage repository 230, transceiver 224) found in the device controller 204. In such a case, the device controller 204 can provide the functionality of these components used by the sensor device 265. Alternatively, the sensor device 265 can include, either on its own or in shared responsibility with the device controller 204, one or more of the components of the device controller 204. In such a case, the sensor device 265 can correspond to a computer system as described below with regard to FIG. 3.

Each of the one or more optional antennae 275 is an electrical device that converts electrical power to RF signals (for transmitting) and RF signals to electrical power (for receiving). In transmission, a radio transmitter (e.g., the transceiver 224) supplies, through an optional switch 245, an electric current oscillating at radio frequency (i.e., a high frequency alternating current (AC)) to the terminals of the antenna 275, and the antenna 275 radiates the energy from the current as RF signals. In reception, an antenna 275 intercepts some of the power of RF signals in order to produce a tiny voltage at its terminals, where the voltage is applied through the switch 245 to a receiver (e.g., the transceiver 224) to be amplified.

An antenna 275 can typically consist of an arrangement of electrical conductors that are electrically connected to each other (often through a transmission line) to create a body of the antenna 275. The body of the antenna 275 is electrically coupled to the transceiver 224. An oscillating current of electrons forced through the body of an antenna 275 by the transceiver 224 will create an oscillating magnetic field around the body, while the charge of the electrons also creates an oscillating electric field along the body of the antenna 275. These time-varying fields radiate away from the antenna 275 into space as a moving transverse RF signal (often an electromagnetic field wave). Conversely, during reception, the oscillating electric and magnetic fields of an incoming RF signal exert force on the electrons in the body of the antenna 275, causing portions of the body of the antenna 275 to move back and forth, creating oscillating currents in the antenna 275.

In certain example embodiments, an antenna 275 can be disposed at, within, or on any portion of the electrical device 102. For example, an antenna 275 can be disposed on the housing 203 of the electrical device 102 and extend away from the electrical device 102. As another example, an antenna 275 can be two-shot injection molded into the housing 203 of the electrical device 102. As yet another example, an antenna 275 can be adhesive mounted onto the housing 203 of the electrical device 102. As still another example, an antenna 275 can be a wire antenna.

Each antenna 275 can be electrically coupled to an optional switch 245, which in turn is electrically coupled to the transceiver 224. A switch 245 can be a single switch device or a number of switch devices arranged in series and/or in parallel with each other. The switch 245 determines which antenna 275 is coupled to the transceiver 224 at any particular point in time. A switch 245 can have one or more contacts, where each contact has an open state and a closed state (position). In the open state, a contact of the switch 245 creates an open circuit, which prevents the transceiver 224 from delivering a RF signal to or receiving a RF signal from the antenna 275 electrically coupled to that contact of the switch 245. In the closed state, a contact of the switch 245 creates a closed circuit, which allows the transceiver 224 to deliver a RF signal to or receive a RF signal from the antenna 275 electrically coupled to that contact of the switch 245. In certain example embodiments, the position of each contact of the switch 245 is controlled by the control engine 206 of the device controller 204. If the switch 245 is a single device, the switch 245 can have multiple contacts.

FIG. 3 illustrates one embodiment of a computing device 318 that implements one or more of the various techniques described herein, and which is representative, in whole or in part, of the elements described herein pursuant to certain exemplary embodiments. For example, the device controller 204 of an electrical device 102 (including components thereof, such as the control engine 206, the hardware processor 220, the storage repository 230, and the transceiver 224) can be considered a computing device 318. Computing device 318 is one example of a computing device and is not intended to suggest any limitation as to scope of use or functionality of the computing device and/or its possible architectures. Neither should computing device 318 be interpreted as having any dependency or requirement relating to any one or combination of components illustrated in the example computing device 318.

Computing device 318 includes one or more processors or processing units 314, one or more memory/storage components 315, one or more input/output (I/O) devices 316, and a bus 317 that allows the various components and devices to communicate with one another. Bus 317 represents one or more of any of several types of bus structures, including a memory bus or memory controller, a peripheral bus, an accelerated graphics port, and a processor or local bus using any of a variety of bus architectures. Bus 317 includes wired and/or wireless buses.

Memory/storage component 315 represents one or more computer storage media. Memory/storage component 315 includes volatile media (such as random access memory (RAM)) and/or nonvolatile media (such as read only memory (ROM), flash memory, optical disks, magnetic disks, and so forth). Memory/storage component 315 includes fixed media (e.g., RAM, ROM, a fixed hard drive, etc.) as well as removable media (e.g., a Flash memory drive, a removable hard drive, an optical disk, and so forth).

One or more I/O devices 316 allow a customer, utility, or other user to enter commands and information to computing device 318, and also allow information to be presented to the customer, utility, or other user and/or other components or devices. Examples of input devices include, but are not limited to, a keyboard, a cursor control device (e.g., a mouse), a microphone, a touchscreen, and a scanner. Examples of output devices include, but are not limited to, a display device (e.g., a monitor or projector), speakers, outputs to a lighting network (e.g., DMX card), a printer, and a network card.

Various techniques are described herein in the general context of software or program modules. Generally, software includes routines, programs, objects, components, data structures, and so forth that perform particular tasks or implement particular abstract data types. An implementation of these modules and techniques are stored on or transmitted across some form of computer readable media. Computer readable media is any available non-transitory medium or non-transitory media that is accessible by a computing device. By way of example, and not limitation, computer readable media includes "computer storage media".

"Computer storage media" and "computer readable medium" include volatile and non-volatile, removable and non-removable media implemented in any method or technology for storage of information such as computer readable instructions, data structures, program modules, or other data. Computer storage media include, but are not limited to, computer recordable media such as RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which is used to store the desired information and which is accessible by a computer.

The computer device 318 is connected to a network (not shown) (e.g., a LAN, a WAN such as the Internet, cloud, or any other similar type of network) via a network interface connection (not shown) according to some exemplary embodiments. Those skilled in the art will appreciate that many different types of computer systems exist (e.g., desktop computer, a laptop computer, a personal media device, a mobile device, such as a cell phone or personal digital assistant, or any other computing system capable of executing computer readable instructions), and the aforementioned input and output means take other forms, now known or later developed, in other exemplary embodiments. Generally speaking, the computer device 318 includes at least the minimal processing, input, and/or output means necessary to practice one or more embodiments.

Further, those skilled in the art will appreciate that one or more elements of the aforementioned computer device 318 is located at a remote location and connected to the other elements over a network in certain exemplary embodiments. Further, one or more embodiments is implemented on a distributed system having one or more nodes, where each portion of the implementation (e.g., the control engine 206) is located on a different node within the distributed system. In one or more embodiments, the node corresponds to a computer system. Alternatively, the node corresponds to a processor with associated physical memory in some exemplary embodiments. The node alternatively corresponds to a processor with shared memory and/or resources in some exemplary embodiments.

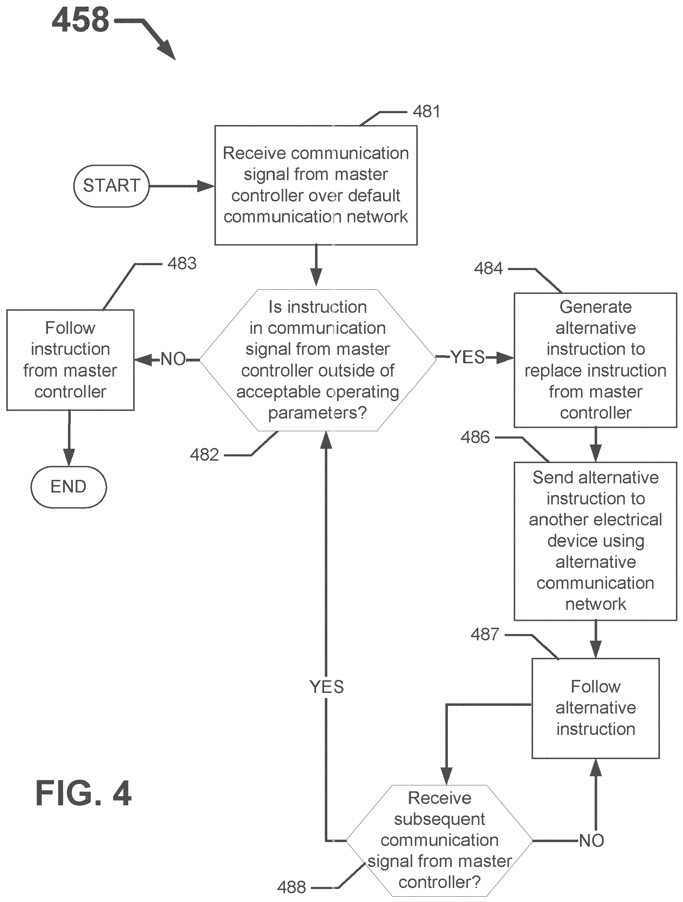

FIG. 4 shows a flowchart 458 of a method for operating an electrical system with a master controller that is compromised according to certain example embodiments. While the various steps in this flowchart 458 are presented sequentially, one of ordinary skill will appreciate that some or all of the steps may be executed in different orders, may be combined or omitted, and some or all of the steps may be executed in parallel. Further, in one or more of the example embodiments, one or more of the steps shown in this example method may be omitted, repeated, and/or performed in a different order.

In addition, a person of ordinary skill in the art will appreciate that additional steps not shown in FIG. 4 may be included in performing this method. Accordingly, the specific arrangement of steps should not be construed as limiting the scope. Further, a particular computing device, such as the computing device 318 discussed above with respect to FIG. 3, can be used to perform one or more of the steps for the methods shown in FIG. 4 in certain example embodiments. Any of the functions performed below by a device controller 204 can involve the use of acceptable operating parameters 231, one or more protocols 232, one or more algorithms 233, and/or stored data 234 stored in a storage repository 230. In addition, or in the alternative, any of the functions in the method can be performed by a user (e.g., user 150).

The method shown in FIG. 4 is merely an example that can be performed by using an example system described herein. In other words, systems for operating an electrical system with a master controller that is compromised can perform other functions using other methods in addition to and/or aside from those shown in FIG. 4. Referring to FIGS. 1 through 4, the method shown in the flowchart 458 of FIG. 4 begins at the START step and proceeds to step 481, where a communication signal is received from a master controller 185 over the default communication network 195. The communication signal can be received by a device controller 204 (including components thereof, such as the communication module 208 and the transceiver 224) of an electrical device 102 within a group of electrical devices 102 controlled by the master controller 185 in an electrical system 100 using one or more communication links 105. The communication signal can include one or more instructions to operate the electrical device 102.

In step 482, a determination is made as to whether one or more of the instructions in the communication signal received from the master controller 185 fall outside the acceptable operating parameters 231. The determination can be made by the control engine 206 of the device controller 204 of the electrical device 102. The determination can be made using acceptable operating parameters 231, one or more protocols 232, and/or one or more algorithms 233 stored in a storage repository 230. When one or more of the instructions fall outside the acceptable operating parameters 231, the master controller 185 may be compromised (e.g., hacked). If one or more of the instructions in the communication signal received from the master controller 185 fall outside the acceptable operating parameters 231, then the process proceeds to step 484. If the instructions in the communication signal received from the master controller 185 do not fall outside the acceptable operating parameters 231, then the process proceeds to step 483.

In step 483, the instructions from the master controller 185 are followed. In other words, since the master controller 185 was determined not to be compromised in step 482 based on the consistency of the instructions in the communication signal relative to the acceptable operating parameters 231, the electrical device 102 operates according to those instructions. The instructions can be followed by the control engine 206 of the device controller 204 of the electrical device 102. The instructions can be followed using one or more protocols 232, one or more algorithms 233, and/or stored data 234 stored in a storage repository 230. When step 483 is complete, the process proceeds to the END step.

In some cases, as part of step 483, a communication signal can be generated and sent by the electrical device 102 to one or more other electrical devices 102 in the electrical system 100 to notify/instruct those one or more other electrical devices 102 to follow subsequent communication signals received from the master controller 185. For example, if those one or more other electrical devices 102 had previously received a communication signal instructing them to ignore instructions from the master controller 185 because the master controller 185 was compromised, then those one or more other electrical devices 102 need to be notified/instructed to resume following instructions from the master controller 185 when the master controller 185 is no longer compromised.

In cases where an issue that caused a master controller 185 to be categorized as compromised is successfully addressed so that the master controller 185 is no longer considered to be compromised, returning the master controller 185 to its designed purpose of controlling a group of electrical devices 102 can be effectuated in one or more of a number of ways. For example, the device controller 204 of the electrical device 102 can receive a communication signal from the gateway 180 and/or a user system 155 of a user 150 that notifies the device controller 204 that the master controller 185 is no longer compromised and/or that any subsequent instructions received from the master controller 185 should be followed.

As another example, rather than ignoring subsequent communication signals received from a compromised master controller 185, an electrical device 102 with the capability of comparing instructions received from the master controller 185 with acceptable operating parameters 231 can continue to receive communication signals (with instructions) from the master controller 185 evaluate each communication signal in light of the acceptable operating parameters 231. Using one or more protocols 232 and/or algorithms 233, the device controller 204 of the electrical device 102 can determine if and when a subsequent communication signal received from the master controller 185 is no longer compromised.

In step 484, an alternative instruction to replace the instruction received from the master controller 185 is generated. The alternative instruction can be entirely within the acceptable operating parameters 231. The alternative instruction can be generated by the control engine 206 of the device controller 204 of the electrical device 102. The alternative instruction can be generated using acceptable operating parameters 231, one or more protocols 232, and/or one or more algorithms 233 stored in a storage repository 230. In certain example embodiments, the alternative instructions will cause the electrical device to operate in such a way that an observer (e.g., a user 150) within the volume of space 199 can notice that the master controller 185 may be compromised. For example, if the electrical device 102 is a luminaire with dimming capabilities that are regularly used by the master controller 185, then the alternative instructions may dictate that the electrical device 102 give a full light output during all daylight hours without any dimming.

In step 486, the alternative instruction is sent to another electrical device 102 (e.g., electrical device 102-N) using an alternative communication network 197 (e.g., alternative communication network 197-1). By using the alternative communication network 197, the master controller 185, determined to be compromised, is unaware of the alternative instruction because the master controller 185 does not have access to the alternative communication network 197. The alternative instruction can be included in a communication signal sent from the electrical device 102 to another electrical device 102. The sending and receiving electrical devices 102 can be part of the same group of electrical devices 102 that are controlled by the master controller 185 determined to be compromised. The alternative instruction can be sent by a device controller 204 (including components thereof, such as the communication module 208 and the transceiver 224) of the electrical device 102.

In certain example embodiments, if the device controller 204 of the electrical device 102 is a type of super node within the electrical system 100, then the electrical device 102 can be capable of communicating directly with the gateway 180 over an alternative communication network 197. In such a case, step 486 can alternatively or additionally include sending the alternative instruction (or a notification that the alternative instruction has been generated and sent) to the gateway 180. This would allow the gateway 180 to notify a user 150 (e.g., using a user system 155) as to the potential compromise of the master controller 185 rather than rely on a user 150 to visually notice a problem based on the output of the electrical device 102 into the volume of space 199.

In step 487, the alternative instruction is followed. In other words, the electrical device 102 that generated the alternative instruction proceeds to operate based on the alternative instructions. To the extent that the alternative instruction contradicts the instructions in the communication signal received from the master controller 185, the instructions from the master controller 185, considered to be compromised, are ignored by the electrical device 102. The alternative instructions can be followed by the control engine 206 of the device controller 204 of the electrical device 102. The alternative instruction can be followed using one or more protocols 232, stored data 234, and/or one or more algorithms 233 stored in a storage repository 230.

In step 488, a determination is made as to whether a subsequent communication signal is received from the master controller 185. In certain example embodiments, the subsequent communication signal is received over the default communication network 195. The subsequent communication signal can be received by a device controller 204 (including components thereof, such as the communication module 208 and the transceiver 224) of the electrical device 102 controlled by the master controller 185 in the electrical system 100 using one or more communication links 105. The subsequent communication signal can include one or more instructions to operate the electrical device 102. If a subsequent communication signal has been received from the master controller 185, then the process reverts to step 482. If a subsequent communication signal has not been received from the master controller 185, then the process reverts to step 487. In alternative cases, rather than reverting to step 487, the process can revert to step 484 if a subsequent communication signal has not been received from the master controller 185 so that a different alternative instruction can be generated.

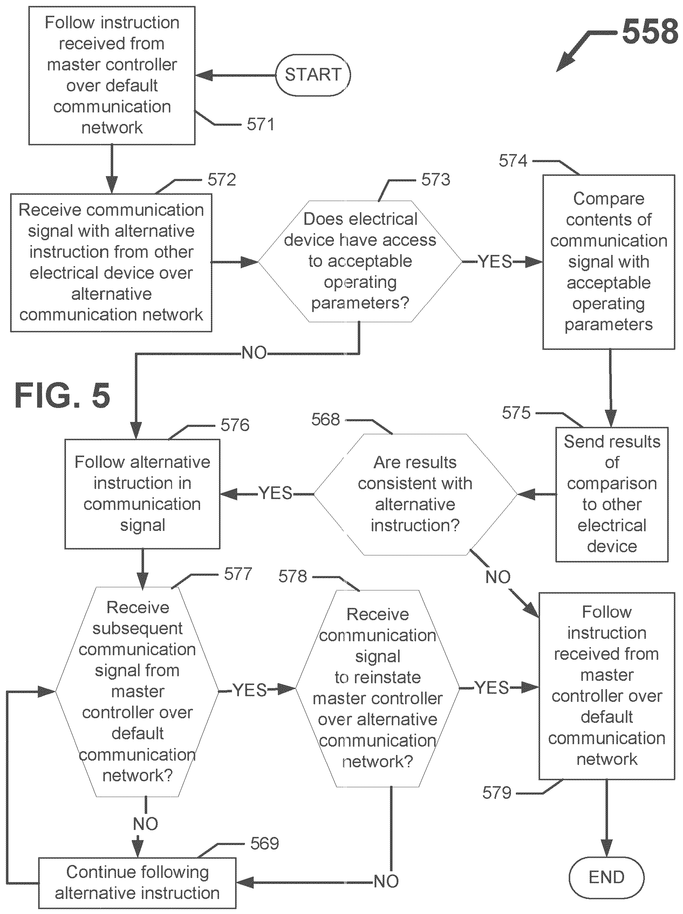

FIG. 5 shows a flowchart 558 of a method for operating an electrical system with a master controller that is compromised according to certain example embodiments. While the various steps in this flowchart 558 are presented sequentially, one of ordinary skill will appreciate that some or all of the steps may be executed in different orders, may be combined or omitted, and some or all of the steps may be executed in parallel. Further, in one or more of the example embodiments, one or more of the steps shown in this example method may be omitted, repeated, and/or performed in a different order.

In addition, a person of ordinary skill in the art will appreciate that additional steps not shown in FIG. 5 may be included in performing this method. Accordingly, the specific arrangement of steps should not be construed as limiting the scope. Further, a particular computing device, such as the computing device 318 discussed above with respect to FIG. 3, can be used to perform one or more of the steps for the methods shown in FIG. 5 in certain example embodiments. Any of the functions performed below by a device controller 204 can involve the use of acceptable operating parameters 231, one or more protocols 232, one or more algorithms 233, and/or stored data 234 stored in a storage repository 230. In addition, or in the alternative, any of the functions in the method can be performed by a user (e.g., user 150).

The method shown in FIG. 5 is merely an example that can be performed by using an example system described herein. In other words, systems for operating an electrical system with a master controller that is compromised can perform other functions using other methods in addition to and/or aside from those shown in FIG. 5. Referring to FIGS. 1 through 5, the method shown in the flowchart 558 of FIG. 5 begins at the START step and proceeds to step 571, where an instruction received from the master controller 185 over the default communication network 195 is followed. In other words, the electrical device 102 that received a communication signal from the master controller 185 proceeds to operate based on the instructions in the communication signal. The instructions can be followed by the control engine 206 of the device controller 204 of the electrical device 102. The instruction can be followed using one or more protocols 232, stored data 234, and/or one or more algorithms 233 stored in a storage repository 230.

In some cases, the electrical device 102 in step 571 does not have the acceptable operating parameters 231 stored in its storage repository 230. In such a case, the control engine 206 of the device controller 204 of the electrical device 102 is unable to determine whether the instructions in the communication signal received from the master controller 185 over the default communication network indicates that the master controller 185 is compromised. In other cases, the electrical device 102 in step 571 does have the acceptable operating parameters 231 stored in its storage repository 230. In such a case, the control engine 206 of the device controller 204 of the electrical device 102 can determine, as of the time that the communication signal is received from the master controller 185, that the instructions within the communication signal fall within the acceptable operating parameters 231. This indicates that, as of the time of step 571, the master controller 185 is not compromised.

In step 572, a communication signal with alternative instructions is received from another electrical device 102 (e.g., electrical device 102-N) over an alternative communication network 197 (e.g., alternative communication network 197-1). By using the alternative communication network 197, the master controller 185, determined to be compromised at the time in step 572, is unaware of the communication signal (and alternative instructions contained therein) because the master controller 185 does not have access to the alternative communication network 197. The sending and receiving electrical devices 102 can be part of the same group of electrical devices 102 that are controlled by the master controller 185 determined to be compromised. The alternative instruction can be sent by a device controller 204 (including components thereof, such as the communication module 208 and the transceiver 224) of the electrical device 102.

In step 573, a determination is made as to whether the electrical device 102 receiving the communication signal in step 572 has access to the acceptable operating parameters 231. The determination can be made by the control engine 206 of the device controller 204 of the electrical device 102. The electrical device 102 can have access to the acceptable operating parameters 231 when the acceptable operating parameters 231 are stored in the storage repository 230 of the electrical device 102. If the electrical device 102 has access to the acceptable operating parameters 231, then the process proceeds to step 574. If the electrical device 102 does not have access to the acceptable operating parameters 231, then the process proceeds to step 576.

In step 574, the contents of the communication signal from step 572 are compared with the acceptable operating parameters 231. The comparison can be made by the control engine 206 of the device controller 204 of the electrical device 102. The comparison can include determining whether the alternative instructions fall outside the acceptable operating parameters 231. The comparison can be made using acceptable operating parameters 231, one or more protocols 232, and/or one or more algorithms 233 stored in a storage repository 230. When one or more of the instructions fall outside the acceptable operating parameters 231, the master controller 185 may be compromised (e.g., hacked).

In step 575, the results of the comparison in step 574 are sent to the electrical device that sent the alternative instructions in step 572. The results may be in agreement that the master controller 185 is compromised. Alternatively, the results may disagree with the alternative instructions because, in the comparison, there was no evidence or insufficient evidence to suggest that the master controller 185 is compromised. As yet another alternative, the results may conclude that the alternative instructions are inconsistent with the acceptable operating parameters 231, regardless of whether the master controller 185 is compromised. The results can be sent using an alternative communication network.

In certain example embodiments, a communication signal used to send the results of the comparison to another electrical device 102 can include or be in the form of a query. For example, one or more of the protocols 232 can require that at least two electrical devices 102 in a group agree that the instructions received by the master controller 185 of that group fall outside the acceptable operating parameters 231. In such a case, the query can seek an evaluation of the most recent instructions received from the master controller 185 by another electrical device 102 in the group after the device controller 204 of the electrical device determines that the most recent instructions fall outside the acceptable operating parameters 231.

In step 568, a determination is made as to whether the results of the comparison in step 574 are consistent with the alternative instruction received from the other electrical device 102. In other words, a determination is made as to whether the electrical device 102 has evidence to conclude that the master controller 185 is compromised or whether the other electrical device 102 has, for some reason (e.g., faulty sensor, malfunctioning device controller 204), incorrectly identified the master controller 185 as being compromised. The determination can be made by the control engine 206 of the device controller 204 of the electrical device 102 using acceptable operating parameters 231, one or more protocols 232, and/or one or more algorithms 233 stored in the storage repository 230 of the electrical device 102. If the results of the comparison in step 574 are consistent with the alternative instruction received from the other electrical device 102, then the process proceeds to step 576. If the results of the comparison in step 574 are not consistent with the alternative instruction received from the other electrical device 102, then the process proceeds to step 579.

In some cases, if the results of the comparison in step 574 are not consistent with the alternative instruction received from the other electrical device 102, then the device controller 204 of the electrical device can generate and send, using the communication module 208 and the transceiver 224), a communication signal to the master controller 185, the network manager 180, and/or a user system 155 of a user 150 stating that the other electrical device 102 may have a faulty component that needs to be inspected and repaired. Such a communication signal can include detailed information about the exchange (e.g., the alternative instruction) that the electrical device 102 had with the other electrical device 102. Such a communication signal can be sent over the default communication network 195.

In step 576, the alternative instructions in the communication signal from step 572 are followed. In other words, the electrical device 102 that received the alternative instruction proceeds to operate based on the alternative instructions. To the extent that the alternative instruction contradicts the instructions in the communication signal received from the master controller 185, the instructions from the master controller 185, considered to be compromised, are ignored by the electrical device 102. The alternative instructions can be followed by the control engine 206 of the device controller 204 of the electrical device 102. The alternative instruction can be followed using one or more protocols 232, stored data 234, and/or one or more algorithms 233 stored in a storage repository 230.

**In** step 577, a determination is made as to whether a subsequent communication signal has been received from the master controller 185 over the default communication network 195. The determination that a subsequent communication signal has been received can be made by the device controller 204 (including components thereof, such as the communication module 208 and the transceiver 224) of the electrical device 102 using one or more communication links 105. The subsequent communication signal can include one or more instructions to operate the electrical device 102. The instructions in the subsequent communication signal can be the same as, or different than, the instructions in the communication signal of step 571. If a subsequent communication signal has been received from the master controller 185, then the process proceeds to step 578. If a subsequent communication signal has not been received from the master controller 185, then the process proceeds to step 569.

In step 578, a determination is made as to whether a communication signal to reinstate the master controller 185 has been received over an alternative communication network 197. The communication signal to reinstate the master controller 185 can declare that the master controller 185 is no longer compromised. The determination that a communication signal to reinstate the master controller 185 has been received can be made by the device controller 204 (including components thereof, such as the communication module 208 and the transceiver 224) of the electrical device 102 using one or more communication links 105. The communication signal to reinstate the master controller 185 can be sent by the gateway 180, a user system 155 of a user 150, and/or another electrical device 102 in the group of electrical devices 102 controlled by the master controller 185. If a communication signal to reinstate the master controller 185 has been received, then the process proceeds to step 579. If a communication signal to reinstate the master controller 185 has not been received, then the process proceeds to step 569.

In step 579, the instruction received from the master controller 185 over the default communication network 195 from step 577 is followed. In other words, the electrical device 102 that received the communication signal from the master controller 185 proceeds to operate based on the instructions in the communication signal. The instructions can be followed by the control engine 206 of the device controller 204 of the electrical device 102. The instruction can be followed using one or more protocols 232, stored data 234, and/or one or more algorithms 233 stored in a storage repository 230. Resuming following the instructions from the master controller 185 indicates that the master controller 185 is no longer compromised. When step 579 is complete, the process proceeds to the END step.

In step 569, the alternative instruction continues to be followed. In other words, the electrical device 102 proceeds to operate based on the alternative instructions. To the extent that the alternative instruction contradicts the instructions in the communication signal received from the master controller 185, the instructions from the master controller 185, considered to be compromised, are ignored by the electrical device 102. The alternative instructions can be followed by the control engine 206 of the device controller 204 of the electrical device 102. The alternative instruction can be followed using one or more protocols 232, stored data 234, and/or one or more algorithms 233 stored in a storage repository 230. When step 569 is complete, the process reverts to step 577.

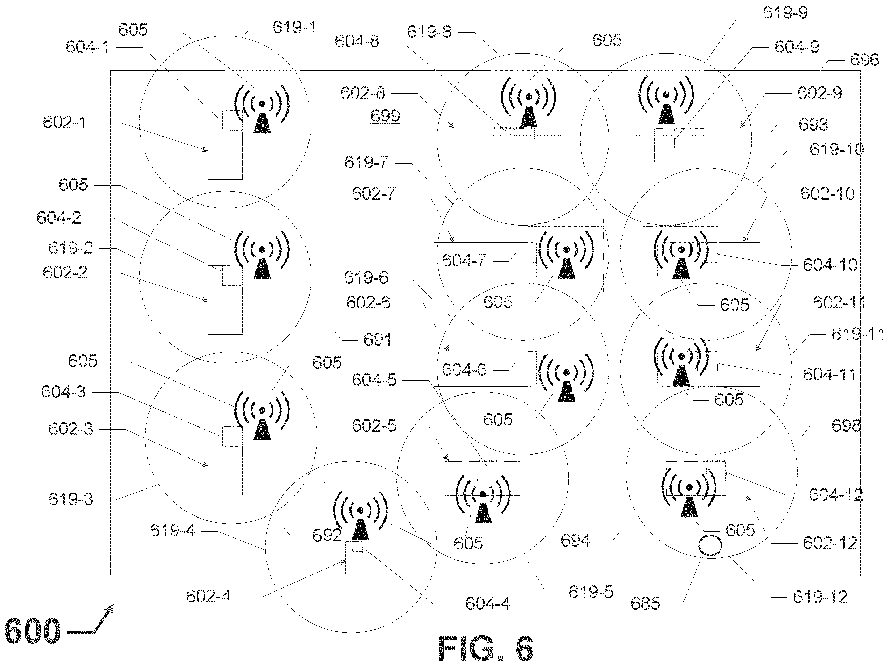

FIG. 6 shows an electrical system 600 of multiple electrical devices 602 that operate with a master controller 685 that is compromised in accordance with certain example embodiments. Referring to FIGS. 1 through 6, the electrical system 600 of FIG. 6 includes twelve electrical devices 602, where each electrical device 602 is a type of light fixture. Specifically, the electrical system 600 includes electrical device 602-1, electrical device 602-2, electrical device 602-3, electrical device 602-4, electrical device 602-5, electrical device 602-6, electrical device 602-7, electrical device 602-8, electrical device 602-9, electrical device 602-10, electrical device 602-11, and electrical device 602-12. In this case, electrical device 602-4 is an illuminated exit sign, and the other 11 electrical devices 602 of FIG. 6 are troffer lights. The electrical system 600 also includes one master controller 685 that controls the 12 electrical devices 602. The master controller 685 and the electrical devices 602 of FIG. 6 can be substantially the same as the master controller 185 and the electrical devices 102 discussed above with respect to FIGS. 1 and 2.

Each electrical device 602 in the electrical system 600 of FIG. 6 includes a device controller 604. Specifically, in this example, electrical device 602-1 includes a device controller 604-1. Electrical device 602-2 includes a device controller 604-2. Electrical device 602-3 includes a device controller 604-3. Electrical device 602-4 includes a device controller 604-4. Electrical device 602-5 includes a device controller 604-5. Electrical device 602-6 includes a device controller 604-6. Electrical device 602-7 includes a device controller 604-7. Electrical device 602-8 includes a device controller 604-8. Electrical device 602-9 includes a device controller 604-9. Electrical device 602-10 includes a device controller 604-10. Electrical device 602-11 includes a device controller 604-11. Electrical device 602-12 includes a device controller 604-12.

All 12 of the electrical devices 602 in FIG. 6 are part of the same group that are controlled by the master controller 685. Each electrical device 602 in the electrical system 600 communicates, directly or indirectly, with the master controller 685 over a default communication network (e.g., default communication network 195). In addition, each electrical device 602 in the electrical system 600 is configured to communicate directly with at least one other electrical device 602, and to the exclusion of the master controller 685, over an alternative communication network (e.g., alternative communication network 197). Each device controller 604 includes a transceiver (e.g., transceiver 224) that uses communication links 605, which are substantially similar to the communication links 105 discussed above, to send and receive communication signals over both the default communication network and the alternative communication network. In this case, the communication links 605 use wireless technology.

The transceiver of the device controller 604 of each electrical device 602 has a range 619 (e.g., 10 meters) that defines a maximum volume within the volume of space 699 in which the transceiver can send and receive communication signals. Each range 619 is a portion of the volume of space 699 in which the electrical devices 602 are, at least in part, located. The range of the transceiver of the master controller 685 covers at least the entire volume of space 699. In addition to the electrical devices 602, the master controller 685 can communicate with a gateway (e.g., gateway 180), not shown in FIG. 6.

Specifically, the transceiver of the device controller 604-1 of electrical device 602-1 has range 619-1, the transceiver of the device controller 604-2 of electrical device 602-2 has range 619-2, the transceiver of the device controller 604-3 of electrical device 602-3 has range 619-3, the transceiver of the device controller 604-4 of electrical device 602-4 has range 619-4, the transceiver of the device controller 604-5 of electrical device 602-5 has range 619-5, the transceiver of the device controller 604-6 of electrical device 602-6 has range 619-6, the transceiver of the device controller 604-7 of electrical device 602-7 has range 619-7, the transceiver of the device controller 604-8 of electrical device 602-8 has range 619-8, the transceiver of the device controller 604-9 of electrical device 602-9 has range 619-9, the transceiver of the device controller 604-10 of electrical device 602-10 has range 619-10, the transceiver of the device controller 604-11 of electrical device 602-11 has range 619-11, and the transceiver of the device controller 604-12 of electrical device 602-12 has range 619-12.

In this example, range 619-1 intersects range 619-2, which intersects range 619-3, which intersects range 619-4, which intersects range 619-5, which intersects range 619-6, which intersects range 619-7, which intersects range 619-8, which intersects range 619-9, which intersects range 619-10, which intersects range 619-11, which intersects range 619-12. As shown in FIG. 6, there is a slight overlap between adjacent ranges 619 so that all of the electrical devices 602 can be directly or indirectly in communication with each other (e.g., over an alternative communication network) without involvement of the master controller 685.

In this case, the volume of space 699 is part of an office space that is defined by exterior walls 696 that form the outer perimeter of the volume of space 699. The volume of space 699 in this case is divided into a number of areas within the exterior walls 696. For example, a wall 691 and a door 692 separate a hallway (in which electrical device 602-1, electrical device 602-2, and electrical device 602-3 are located) from a work space (in which the remainder of the electrical devices 602 are located). A small office, defined by wall 694 and a door 698, and in which electrical device 602-12 and the master controller 685 are located, subdivides the work space within the volume of space 699. Electrical device 602-4, the exit sign, is located above and adjacent to the door 692 within the work space. A number of cubicle walls 693 are located within the work space. The communication links 605, as in this case using radio frequency waves, can be capable of having a range (not shown) that extend beyond a wall, door, or other boundary within the volume of space 699.

When the master controller 685 becomes compromised (e.g., hacked), one or more of the electrical devices 602 can determine that instructions received in a communication signal from the master controller 685 over the default communication network fall outside of the acceptable operating parameters. At that point, the electrical devices 602 can coordinate among themselves, using an alternative communication network, to operate using different instructions relative to what was sent by the master controller 685 and to ignore subsequent communication signals from the master controller 685 until confirmation is received that the master controller 685 is no longer compromised.

Example embodiments can be used to operate an electrical system with a master controller that is compromised (e.g., hacked, malfunctioning). Example embodiments can be utilized with any type of electrical system, including lighting systems. Example embodiments can be used in new installations of electrical systems (including electrical devices thereof) as well as retrofitting existing electrical systems (including electrical devices thereof). Example embodiments also provide a number of other benefits. Such other benefits can include, but are not limited to, increased ease of maintenance, greater ease of use, increased reliability, modularity, ease of installation, and compliance with industry standards that apply to electrical devices and electrical systems.

## Claims

1. An electrical device (102) of an electrical system (100), the electrical device comprising:
a communication module (208) configured to receive instructions from a master controller (185) of the electrical system over a default communication network (195), and wherein the communication module is further configured to communicate with a second electrical device (102) of the electrical system over an alternative communication network (197); and
a device controller (204) communicably coupled to the communication module, wherein the device controller is configured to:
receive a first communication from the communication module, wherein the first communication is received by the communication module from the master controller over the default communication network, and wherein the first communication comprises a first instruction;
determine that the first instruction of the first communication falls outside a plurality of acceptable operating parameters (231);
send, via the communication module, a query to the second electrical device over an alternative communication network (197), wherein the second electrical device is also in communication with the master controller via the default communication network, and wherein the query requests a reply from the second electrical device indicating the second electrical device received the same first instruction from the master controller;
receive, via the communication module, a response from the second electrical device confirming the second electrical device also received the first instruction from the master controller;
generate a second instruction to replace the first instruction, wherein the second instruction falls within the plurality of acceptable operating parameters; and
send, using the communication module, the second instruction to a third electrical device over the alternative communication network, wherein the second instruction controls operation of the third electrical device, and wherein at least one subsequent instruction received from the master controller by the electrical device or second electrical device is not acted upon by the electrical device or second electrical device.

2. The electrical device of Claim 1, wherein the alternative communication network is inaccessible to the master controller.

3. The electrical device of Claim 1, wherein the device controller is further configured to operate an electrical device component (242) according to the second instruction.

4. The electrical device of Claim 1, wherein the response from the second electrical device confirming the second electrical device also received the first instruction from the master controller confirms that the first instruction sent by the master controller falls outside the plurality of acceptable operating parameters.

5. The electrical device of Claim 1, wherein determining that the first instruction of the first communication falls outside the plurality of acceptable operating parameters indicates that the master controller has been compromised.

6. The electrical device of Claim 1, wherein the default communication network sends the first communication signal at a first frequency compared to a second frequency used by the alternative communication network to send the second communication signal.

7. The electrical device of Claim 1, wherein the second communication signal includes an identification code that is not recognized by the master controller.

8. The electrical device of Claim 1, wherein the device controller is further configured to send, using the communication module, the second instruction to a gateway that controls the master controller.

9. A method for operating an electrical system (100) with a master controller (185) that is compromised, the method comprising:
receiving, by a first electrical device (102) of the electrical system, a first communication from the master controller over a default communication network (195), wherein the first communication comprises a first instruction;
determining that the first instruction of the first communication falls outside a plurality of acceptable operating parameters (231);
sending a query to a second electrical device over an alternative communication network (197), wherein the second electrical device is also in communication with the master controller via the default communication network, and wherein the query requests a reply from the second electrical device indicating the second electrical device received the same first instruction from the master controller;
receiving a response from the second electrical device confirming the second electrical device also received the first instruction from the master controller;
generating a second instruction to replace the first instruction; and
sending the second instruction to a third electrical device (102) of the electrical system over the alternative communication network (197), wherein the second instruction controls operation of the third electrical device, and wherein at least one subsequent instruction received from the master controller by the first electrical device or the second electrical device is not acted upon by the first electrical device or the second electrical device.

10. The method of Claim 9, further comprising:
sending the second instruction to a gateway (180) over the alternative communication network, wherein the gateway controls the master controller.

11. The method of Claim 9, further comprising:
receiving a third communication from the master controller over the default communication network, wherein the first communication comprises a third instruction;
determining that the third instruction of the third communication falls outside the plurality of acceptable operating parameters; and
ignoring the third instruction.

12. The method of Claim 9, further comprising:
receiving a third communication from the master controller over the default communication network, wherein the third communication comprises a third instruction;
determining that the third instruction of the third communication falls within the plurality of acceptable operating parameters;
generating a fourth instruction; and
sending the fourth instruction to the second electrical device over the alternative communication network, wherein the fourth instruction instructs the second electrical device to follow subsequent communications received from the master controller.

13. The method of Claim 9, further comprising:
receiving, from the second electrical device over the alternative communication network, a query comprising a third instruction, wherein the third instruction is received in a third communication by the second electrical device from the master controller over the default communication network;
determining whether the third instruction falls outside the plurality of acceptable operating parameters;
generating, after determining whether the third instruction falls outside the plurality of acceptable operating parameters, a response comprising a determination as to whether the third instruction falls outside the plurality of acceptable operating parameters; and
sending the response to the second electrical device over the alternative communication network.

14. The method of Claim 9, further comprising:
operating the first electrical device according to the second instruction.

## Patentansprüche

1. Elektrische Vorrichtung (102) eines elektrischen Systems (100), die elektrische Vorrichtung umfassend:
ein Kommunikationsmodul (208), das konfiguriert ist, um Anweisungen von einer Hauptsteuerung (185) des elektrischen Systems über ein Standardkommunikationsnetzwerk (195) zu empfangen, und wobei das Kommunikationsmodul ferner konfiguriert ist, um mit einer zweiten elektrischen Vorrichtung (102) des elektrischen Systems über ein alternatives Kommunikationsnetzwerk (197) zu kommunizieren; und
eine Vorrichtungssteuerung (204), die an das Kommunikationsmodul kommunikativ gekoppelt ist, wobei die Vorrichtungssteuerung konfiguriert ist zum:
Empfangen einer ersten Kommunikation von dem Kommunikationsmodul, wobei die erste Kommunikation durch das Kommunikationsmodul von der Hauptsteuerung über das Standardkommunikationsnetzwerk empfangen wird, und wobei die erste Kommunikation eine erste Anweisung umfasst;
Bestimmen, dass die erste Anweisung der ersten Kommunikation außerhalb einer Vielzahl von akzeptablen Betriebsparametern (231) liegt;
Senden, über das Kommunikationsmodul, einer Abfrage an die zweite elektrische Vorrichtung über ein alternatives Kommunikationsnetzwerk (197), wobei die zweite elektrische Vorrichtung ebenso in Kommunikation mit der Hauptsteuerung über das Standardkommunikationsnetzwerk steht, und wobei die Abfrage eine Antwort von der zweiten elektrischen Vorrichtung anfordert, die anzeigt, dass die zweite elektrische Vorrichtung die gleiche erste Anweisung von der Hauptsteuerung empfängt;
Empfangen, über das Kommunikationsmodul, einer Antwort von der zweiten elektrischen Vorrichtung, die bestätigt, dass die zweite elektrische Vorrichtung ebenso die erste Anweisung von der Hauptsteuerung empfängt;
Erzeugen einer zweiten Anweisung, um die erste Anweisung zu ersetzen, wobei die zweite Anweisung innerhalb der Vielzahl von akzeptablen Betriebsparametern liegt; und
Senden, unter Verwendung des Kommunikationsmoduls, der zweiten Anweisung an eine dritte elektrische Vorrichtung über das alternative Kommunikationsnetzwerk, wobei die zweite Anweisung den Betrieb der dritten elektrischen Vorrichtung steuert, und wobei mindestens eine nachfolgende Anweisung, die von der Hauptsteuerung durch die elektrische Vorrichtung oder zweite elektrische Vorrichtung empfangen wird, nicht durch die elektrische Vorrichtung oder zweite elektrische Vorrichtung ausgeführt wird.

2. Elektrische Vorrichtung nach Anspruch 1, wobei das alternative Kommunikationsnetzwerk für die Hauptsteuerung unzugänglich ist.

3. Elektrische Vorrichtung nach Anspruch 1, wobei die Vorrichtungssteuerung ferner konfiguriert ist, um eine elektrische Vorrichtungskomponente (242) gemäß der zweiten Anweisung zu betreiben.

4. Elektrische Vorrichtung nach Anspruch 1, wobei die Antwort von der zweiten elektrischen Vorrichtung, die bestätigt, dass die zweite elektrische Vorrichtung ebenso die erste Anweisung von der Hauptsteuerung empfängt, bestätigt, dass die erste Anweisung, die durch die Hauptsteuerung gesendet wird, außerhalb der Vielzahl von akzeptablen Betriebsparametern liegt.

5. Elektrische Vorrichtung nach Anspruch 1, wobei das Bestimmen, dass die erste Anweisung der ersten Kommunikation außerhalb der Vielzahl von akzeptablen Betriebsparametern liegt, anzeigt, dass die Hauptsteuerung kompromittiert wurde.

6. Elektrische Vorrichtung nach Anspruch 1, wobei das Standardkommunikationsnetzwerk das erste Kommunikationssignal bei einer ersten Frequenz im Vergleich zu einer zweiten Frequenz sendet, die durch das alternative Kommunikationsnetzwerk verwendet wird, um das zweite Kommunikationssignal zu senden.

7. Elektrische Vorrichtung nach Anspruch 1, wobei das zweite Kommunikationssignal einen Identifikationscode einschließt, der durch die Hauptsteuerung nicht erkannt wird.

8. Elektrische Vorrichtung nach Anspruch 1, wobei die Vorrichtungssteuerung ferner konfiguriert ist, um unter Verwendung des Kommunikationsmoduls die zweite Anweisung an ein Gateway zu senden, das die Hauptsteuerung steuert.

9. Verfahren zum Betreiben eines elektrischen Systems (100) mit einer Hauptsteuerung (185), die kompromittiert ist, das Verfahren umfassend:
Empfangen, durch eine erste elektrische Vorrichtung (102) des elektrischen Systems, einer ersten Kommunikation von der Hauptsteuerung über ein Standardkommunikationsnetzwerk (195), wobei die erste Kommunikation eine erste Anweisung umfasst;
Bestimmen, dass die erste Anweisung der ersten Kommunikation außerhalb einer Vielzahl von akzeptablen Betriebsparametern (231) liegt;
Senden einer Abfrage an eine zweite elektrische Vorrichtung über ein alternatives Kommunikationsnetzwerk (197), wobei die zweite elektrische Vorrichtung ebenso in Kommunikation mit der Hauptsteuerung über das Standardkommunikationsnetzwerk steht, und wobei die Abfrage eine Antwort von der zweiten elektrischen Vorrichtung anfordert, die anzeigt, dass die zweite elektrische Vorrichtung die gleiche erste Anweisung von der Hauptsteuerung empfängt;
Empfangen einer Antwort von der zweiten elektrischen Vorrichtung, die bestätigt, dass die zweite elektrische Vorrichtung ebenso die erste Anweisung von der Hauptsteuerung empfängt;
Erzeugen einer zweiten Anweisung, um die erste Anweisung zu ersetzen; und Senden der zweiten Anweisung an eine dritte elektrische Vorrichtung (102) des elektrischen Systems über das alternative Kommunikationsnetzwerk (197), wobei die zweite Anweisung den Betrieb der dritten elektrischen Vorrichtung steuert, und wobei mindestens eine nachfolgende Anweisung, die von der Hauptsteuerung durch die erste elektrische Vorrichtung oder die zweite elektrische Vorrichtung empfangen wird, nicht durch die erste elektrische Vorrichtung oder die zweite elektrische Vorrichtung ausgeführt wird.

10. Verfahren nach Anspruch 9, ferner umfassend:
Senden der zweiten Anweisung an ein Gateway (180) über das alternative Kommunikationsnetzwerk, wobei das Gateway die Hauptsteuerung steuert.

11. Verfahren nach Anspruch 9, ferner umfassend:
Empfangen einer dritten Kommunikation von der Hauptsteuerung über das Standardkommunikationsnetzwerk, wobei die erste Kommunikation eine dritte Anweisung umfasst;
Bestimmen, dass die dritte Anweisung der dritten Kommunikation außerhalb der Vielzahl von akzeptablen Betriebsparametern liegt; und
Ignorieren der dritten Anweisung.

12. Verfahren nach Anspruch 9, ferner umfassend:
Empfangen einer dritten Kommunikation von der Hauptsteuerung über das Standardkommunikationsnetzwerk, wobei die dritte Kommunikation eine dritte Anweisung umfasst;
Bestimmen, dass die dritte Anweisung der dritten Kommunikation innerhalb der Vielzahl von akzeptablen Betriebsparametern liegt;
Erzeugen einer vierten Anweisung; und
Senden der vierten Anweisung an die zweite elektrische Vorrichtung über das alternative Kommunikationsnetzwerk, wobei die vierte Anweisung die zweite elektrische Vorrichtung anweist, nachfolgenden Kommunikationen zu folgen, die von der Hauptsteuerung empfangen werden.

13. Verfahren nach Anspruch 9, ferner umfassend:
Empfangen, von der zweiten elektrischen Vorrichtung über das alternative Kommunikationsnetzwerk, einer Abfrage, umfassend eine dritte Anweisung, wobei die dritte Anweisung in einer dritten Kommunikation durch die zweite elektrische Vorrichtung von der Hauptsteuerung über das Standardkommunikationsnetzwerk empfangen wird;
Bestimmen, ob die dritte Anweisung außerhalb der Vielzahl von akzeptablen Betriebsparametern liegt;
Erzeugen, nach dem Bestimmen, ob die dritte Anweisung außerhalb der Vielzahl von akzeptablen Betriebsparametern liegt, einer Antwort, umfassend eine Bestimmung darüber, ob die dritte Anweisung außerhalb der Vielzahl von akzeptablen Betriebsparametern liegt; und
Senden der Antwort an die zweite elektrische Vorrichtung über das alternative Kommunikationsnetzwerk.

14. Verfahren nach Anspruch 9, ferner umfassend:
Betreiben der ersten elektrischen Vorrichtung gemäß der zweiten Anweisung.

## Revendications

1. Dispositif électrique (102) d'un système électrique (100), le dispositif électrique comprenant :
un module de communication (208) configuré pour recevoir des instructions à partir d'un dispositif de commande maître (185) du système électrique sur un réseau de communication par défaut (195), et dans lequel le module de communication est en outre configuré pour communiquer avec un deuxième dispositif électrique (102) du système électrique sur un réseau de communication alternatif (197) ; et
un dispositif de commande de dispositif (204) couplé en communication au module de communication, dans lequel le dispositif de commande de dispositif est configuré pour :
recevoir une première communication à partir du module de communication, dans lequel la première communication est reçue par le module de communication à partir du dispositif de commande maître sur le réseau de communication par défaut, et dans lequel la première communication comprend une première instruction ;
déterminer que la première instruction de la première communication se situe en dehors d'une pluralité de paramètres de fonctionnement acceptables (231) ;
envoyer, par l'intermédiaire du module de communication, une requête au deuxième dispositif électrique sur un réseau de communication alternatif (197), dans lequel le deuxième dispositif électrique est également en communication avec le dispositif de commande maître par l'intermédiaire du réseau de communication par défaut, et dans lequel la requête demande une réponse provenant du deuxième dispositif électrique indiquant que le deuxième dispositif électrique a reçu la même première instruction à partir du dispositif de commande maître ;
recevoir, par l'intermédiaire du module de communication, une réponse provenant du deuxième dispositif électrique confirmant que le deuxième dispositif électrique a également reçu la première instruction à partir du dispositif de commande maître ;
générer une deuxième instruction pour remplacer la première instruction, dans lequel la deuxième instruction se situe dans la pluralité de paramètres de fonctionnement acceptables ; et
envoyer, à l'aide du module de communication, la deuxième instruction à un troisième dispositif électrique sur le réseau de communication alternatif, dans lequel la deuxième instruction commande le fonctionnement du troisième dispositif électrique, et dans lequel au moins une instruction ultérieure reçue à partir du dispositif de commande maître par le dispositif électrique ou le deuxième dispositif électrique n'est pas suivie d'effet par le dispositif électrique ou le deuxième dispositif électrique.

2. Dispositif électrique selon la revendication 1, dans lequel le réseau de communication alternatif est inaccessible au dispositif de commande maître.

3. Dispositif électrique selon la revendication 1, dans lequel le dispositif de commande de dispositif est en outre configuré pour faire fonctionner un composant de dispositif électrique (242) selon la deuxième instruction.

4. Dispositif électrique selon la revendication 1, dans lequel la réponse provenant du deuxième dispositif électrique confirmant que le deuxième dispositif électrique a également reçu la première instruction à partir du dispositif de commande maître confirme que la première instruction envoyée par le dispositif de commande maître se situe en dehors de la pluralité de paramètres de fonctionnement acceptables.

5. Dispositif électrique selon la revendication 1, dans lequel le fait de déterminer que la première instruction de la première communication se situe en dehors de la pluralité de paramètres de fonctionnement acceptables indique que le dispositif de commande maître a été compromis.

6. Dispositif électrique selon la revendication 1, dans lequel le réseau de communication par défaut envoie le premier signal de communication à une première fréquence par comparaison avec une seconde fréquence utilisée par le réseau de communication alternatif pour envoyer le second signal de communication.

7. Dispositif électrique selon la revendication 1, dans lequel le second signal de communication comporte un code d'identification qui n'est pas reconnu par le dispositif de commande maître.

8. Dispositif électrique selon la revendication 1, dans lequel le dispositif de commande de dispositif est en outre configuré pour envoyer, à l'aide du module de communication, la deuxième instruction à une passerelle qui commande le dispositif de commande maître.

9. Procédé de fonctionnement d'un système électrique (100) avec un dispositif de commande maître (185) qui est compromis, le procédé comprenant :
la réception, par un premier dispositif électrique (102) du système électrique, d'une première communication à partir du dispositif de commande maître sur un réseau de communication par défaut (195), dans lequel la première communication comprend une première instruction ;
le fait de déterminer que la première instruction de la première communication se situe en dehors d'une pluralité de paramètres de fonctionnement acceptables (231) ;
l'envoi d'une requête à un deuxième dispositif électrique sur un réseau de communication alternatif (197), dans lequel le deuxième dispositif électrique est également en communication avec le dispositif de commande maître par l'intermédiaire du réseau de communication par défaut, et dans lequel la requête demande une réponse provenant du deuxième dispositif électrique indiquant que le deuxième dispositif électrique a reçu la même première instruction à partir du dispositif de commande maître ;
la réception d'une réponse provenant du deuxième dispositif électrique confirmant que le deuxième dispositif électrique a également reçu la première instruction à partir du dispositif de commande maître ;
la génération d'une deuxième instruction pour remplacer la première instruction ; et l'envoi de la deuxième instruction à un troisième dispositif électrique (102) du système électrique sur le réseau de communication alternatif (197), dans lequel la deuxième instruction commande le fonctionnement du troisième dispositif électrique, et dans lequel au moins une instruction ultérieure reçue à partir du dispositif de commande maître par le premier dispositif électrique ou le deuxième dispositif électrique n'est pas suivie d'effet par le premier dispositif électrique ou le deuxième dispositif électrique.

10. Procédé selon la revendication 9, comprenant en outre :
l'envoi de la deuxième instruction à une passerelle (180) sur le réseau de communication alternatif, dans lequel la passerelle commande le dispositif de commande maître.

11. Procédé selon la revendication 9, comprenant en outre :
la réception d'une troisième communication à partir du dispositif de commande maître sur le réseau de communication par défaut, dans lequel la première communication comprend une troisième instruction ;
le fait de déterminer que la troisième instruction de la troisième communication se situe en dehors de la pluralité de paramètres de fonctionnement acceptables ; et
le fait d'ignorer la troisième instruction.

12. Procédé selon la revendication 9, comprenant en outre :
la réception d'une troisième communication à partir du dispositif de commande maître sur le réseau de communication par défaut, dans lequel la troisième communication comprend une troisième instruction ;
le fait de déterminer que la troisième instruction de la troisième communication se situe dans la pluralité de paramètres de fonctionnement acceptables ;
la génération d'une quatrième instruction ; et
l'envoi de la quatrième instruction au deuxième dispositif électrique sur le réseau de communication alternatif, dans lequel la quatrième instruction donne instruction au deuxième dispositif électrique de suivre des communications ultérieures reçues à partir du dispositif de commande maître.

13. Procédé selon la revendication 9, comprenant en outre :
la réception, à partir du deuxième dispositif électrique sur le réseau de communication alternatif, d'une requête comprenant une troisième instruction, dans lequel la troisième instruction est reçue dans une troisième communication par le deuxième dispositif électrique à partir du dispositif de commande maître sur le réseau de communication par défaut ;
le fait de déterminer si la troisième instruction se situe en dehors de la pluralité de paramètres de fonctionnement acceptables ;
la génération, après avoir déterminé si la troisième instruction se situe en dehors de la pluralité de paramètres de fonctionnement acceptables, d'une réponse comprenant une détermination quant à savoir si la troisième instruction se situe en dehors de la pluralité de paramètres de fonctionnement acceptables ; et
l'envoi de la réponse au deuxième dispositif électrique sur le réseau de communication alternatif.

14. Procédé selon la revendication 9, comprenant en outre :
le fonctionnement du premier dispositif électrique selon la deuxième instruction.
